# EUROPEAN PATENT APPLICATION

(11) **EP 4 447 599 A1**
(43) Date of publication of application: **16.10.2024**
(21) Application number: 21966859.7
(22) Date of filing: 10.12.2021
(51) Int. Cl.: H04W 74/08

(54) **METHOD AND APPARATUS FOR DETERMINING RANDOM ACCESS OCCASION RESOURCE INFORMATION, AND METHOD AND APPARATUS FOR INDICATING RANDOM ACCESS OCCASION RESOURCE INFORMATION**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Zimmermann, Tankred Klaus
(86) International application number: PCT/CN2021/137259
(87) International publication number: WO 2023/102941

(57) **Abstract**

The present invention relates to a method and apparatus for determining random access occasion resource information, and a method and apparatus for indicating random access occasion resource information. The method for determining random access occasion resource information comprising: triggering 2-step contention-free random access (CFRA); and when there is no random access occasion (RO) resource information, which is independently configured for a terminal, in configuration information of the CFRA, determining RO resource information of the triggered two-step CFRA according to RO resource information of a specified release of contention-based random access (CBRA). By means of the present invention, a terminal can determine RO resource information of triggered 2-step CFRA according to RO resource information of a specified release of CBRA, thereby avoiding the technical problem of determining the RO resource information of the 2-step CFRA according to RO resource information for which version of CBRA being difficult to determine when the terminal encounters RO resource information of a plurality of versions of CBRA.

## Description

### TECHNICAL FIELD

The present invention or disclosure relates to the field of communication technologies, and in particular, to a method for determining random access occasion resource information, a method for indicating random access occasion resource information, a method for configuring contention-free random access, an apparatus for determining random access occasion resource information, an apparatus for indicating random access occasion resource information, an apparatus for configuring contention-free random access, a communication device and a computer readable storage medium.

### BACKGROUND

In some scenarios, terminals can initiate random access. Random access is divided by steps, which can include 2-step random access and 4-step random access. Random access is divided by contention type, which can include Contention-based Random Access (CBRA) and Contention-Free Random Access (CFRA).

For the case of two-step CFRA, after initiating the two-step CFRA, the terminal needs to initiate the two-step CFRA at the random access occasion, also known as physical random access channel occasion (PRACH Occasion, RO). Therefore, the terminal first needs to determine RO resource information for the two-step CFRA.

However, in some cases, the network side does not indicate RO resources in the CFRA configuration information. In this case, the terminal can use RO resources in either 2-step CBRA configuration information or a 4-step CBRA configuration information.

With the development of communication technology, application scenarios have also expanded. In order to adapt to features of different scenarios, different CBRA configuration information can be configured for different features. Therefore, the terminal can be configured with multiple CBRA configuration information. This will result in that, when no RO resource information is determined in the CFRA configuration information, it is difficult for the terminal to determine RO resources in which CBRA configuration information to be used for CFRA.

### SUMMARY

In view of this, embodiments of the present invention provide a method for determining random access occasion resource information, a method for indicating random access occasion resource information, a method for configuring contention-free random access, an apparatus for determining random access occasion resource information, an apparatus for indicating random access occasion resource information, an apparatus for configuring contention-free random access, a communication device and a computer readable storage medium, to solve technical problems in the related art.

According to embodiments of a first aspect of the present invention, a method for determining random access occasion resource information is provided. The method is performed by a terminal, and the method includes: initiating a 2-step contention-free random access (CFRA); and in case that separate random access occasion (RO) resource information configured in configuration information for the CFRA is absent for the terminal, determining RO resource information for the initiated 2-step CFRA according to RO resource information for a contention-based random access (CBRA) in a specified release.

According to embodiments of a second aspect of the present invention, a method for indicating random access occasion resource information is provided. The method is performed by a network side device, and the method includes: initiating a terminal to perform 2-step contention-free random access (CFRA); and in case that separate random access occasion (RO) resource information configured in configuration information for the CFRA is absent for the terminal, indicating the terminal to determine RO resource information for the initiated 2-step CFRA according to RO resource information for a contention-based random access (CBRA) in a specified release.

According to embodiments of a third aspect of the present invention, a method for configuring contention-free random access is provided. The method is performed by a network side device, and the method includes: in case that resources for 2-step contention-based random access (CBRA) in a specified release are configured on a bandwidth part (BWP) selected by a terminal, configuring resources for 2-step contention-free random access (CFRA).

According to embodiments of a fourth aspect of the present invention, a method for configuring contention-free random access is provided. The method is performed by a network side device, and the method includes: in case that resources for a 4-step contention-based random access (CBRA) in a specified release are not configured on a bandwidth part (BWP) selected by a terminal, or in case that resources for the 4-step CBRA in a specified release are configured on the BWP and the resources for the 4-step CBRA in the specified release are not shared, configuring RO configuration information in resource information for the 2-step CFRA.

According to embodiments of a fifth aspect of the present invention, an apparatus for determining random access occasion resource information is provided. The apparatus includes one or more processor. The processor is configured to: initiate a 2-step contention-free random access (CFRA); and in case that separate random access occasion (RO) resource information configured in configuration information for the CFRA is absent for the terminal, determine RO resource information for the initiated 2-step CFRA according to RO resource information for a contention-based random access (CBRA) in a specified release.

According to embodiments of a sixth aspect of the present invention, an apparatus for indicating random access occasion resource information is provided. The apparatus includes one or more processor. The processor is configured to: initiate a terminal to perform 2-step contention-free random access (CFRA); and in case that separate random access occasion (RO) resource information configured in configuration information for the CFRA is absent for the terminal, indicate the terminal to determine RO resource information for the initiated 2-step CFRA according to RO resource information for a contention-based random access (CBRA) in a specified release.

According to embodiments of a seventh aspect of the present invention, an apparatus for configuring contention-free random access is provided. The apparatus includes one or more processor. The processor is configured to configure resources for 2-step contention-free random access (CFRA) in case that resources for 2-step contention-based random access (CBRA) in a specified release are configured on a bandwidth part (BWP) selected by a terminal.

According to embodiments of an eighth aspect of the present invention, an apparatus for configuring contention-free random access is provided. The apparatus includes one or more processor. The processor is configured to configure RO configuration information in resource information for the 2-step CFRA, in case that resources for a 4-step contention-based random access (CBRA) in a specified release are not configured on a bandwidth part (BWP) selected by a terminal, or in case that resources for the 4-step CBRA in a specified release are configured on the BWP and the resources for the 4-step CBRA in the specified release are not shared.

According to embodiments of a ninth aspect of the present invention, a communication device is provided, including: a processor; and a memory configured to store a computer program. When the computer program is executed by a processor, the method for determining random access occasion resource information described above is implemented.

According to embodiments of a tenth aspect of the present invention, a communication device is provided, including: a processor; and a memory configured to store a computer program. When the computer program is executed by a processor, the method for indicating random access occasion resource information described above and/or the method for configuring contention-free random access described above is implemented.

According to embodiments of an eleventh aspect of the present invention, a computer readable storage medium is provided. The storage medium is configured to store a computer program, which when executed by a processor, implements steps in the method for determining random access occasion resource information described above.

According to embodiments of a twelfth aspect of the present invention, a computer readable storage medium is provided. The storage medium is configured to store a computer program, which when executed by a processor, implements steps in the method for indicating random access occasion resource information described above, and/or steps in the method for configuring contention-free random access described above.

According to embodiments of the present invention, the terminal can determine the RO resource information for the initiated two-step CFRA based on RO resource information for CBRA in the specified release. Therefore, even if the terminal is configured with the RO resource information for the CBRA in legacy release and the RO resource information for CBRA in the Release 17, it can accurately determine RO resource information for CBRA in which release to be used in determining the RO resource information for the initiated two-step CFRA, avoiding the technical problem of being difficult for the terminal to determine RO resource information for CBRA in which release to be used to determine RO resource information for the two-step CFRA when facing RO resource information for CBRA in multiple releases.

### BRIEF DESCRIPTION OF THE DRAWINGS

In order to provide a clearer explanation of the technical solution in embodiments of the present invention, a brief introduction will be given below to the accompanying drawings required in the description of the embodiments. It is obvious that the accompanying drawings are only some of the disclosed embodiments. For those skilled in the art, other accompanying drawings can be obtained based on these drawings without creative labor.
Fig. 1 is a schematic flowchart of a method for determining random access occasion resource information illustrated according to an embodiment of the present invention.
Fig. 2 is a schematic flowchart of another method for determining random access occasion resource information illustrated according to an embodiment of the present invention.
Fig. 3 is a schematic flowchart of another method for determining random access occasion resource information illustrated according to an embodiment of the present invention.
Fig. 4 is a schematic flowchart of yet another method for determining random access occasion resource information illustrated according to an embodiment of the present invention.
Fig. 5 is a schematic flowchart of yet another method for determining random access occasion resource information illustrated according to an embodiment of the present invention.
Fig. 6 is a schematic flowchart of yet another method for determining random access occasion resource information illustrated according to an embodiment of the present invention.
Fig. 7 is a schematic flowchart of yet another method for determining random access occasion resource information illustrated according to an embodiment of the present invention.
Fig. 8 is a schematic flowchart of yet another method for determining random access occasion resource information illustrated according to an embodiment of the present invention.
Fig. 9 is a schematic flowchart of yet another method for determining random access occasion resource information illustrated according to an embodiment of the present invention.
Fig. 10 is a schematic flowchart of yet another method for determining random access occasion resource information illustrated according to an embodiment of the present invention.
Fig. 11 is a schematic flowchart of a method for indicating random access occasion resource information illustrated according to an embodiment of the present invention.
Fig. 12 is a schematic flowchart of another method for indicating random access occasion resource information illustrated according to an embodiment of the present invention.
Fig. 13 is a schematic flowchart of yet another method for indicating random access occasion resource information illustrated according to an embodiment of the present invention.
Fig. 14 is a schematic flowchart of yet another method for indicating random access occasion resource information illustrated according to an embodiment of the present invention.
Fig. 15 is a schematic flowchart of yet another method for indicating random access occasion resource information illustrated according to an embodiment of the present invention.
Fig. 16 is a schematic flowchart of yet another method for indicating random access occasion resource information illustrated according to an embodiment of the present invention.
Fig. 17 is a schematic flowchart of yet another method for indicating random access occasion resource information illustrated according to an embodiment of the present invention.
Fig. 18 is a schematic flowchart of yet another method for indicating random access occasion resource information illustrated according to an embodiment of the present invention.
Fig. 19 is a schematic flowchart of yet another method for indicating random access occasion resource information illustrated according to an embodiment of the present invention.
Fig. 20 is a schematic flowchart of yet another method for indicating random access occasion resource information illustrated according to an embodiment of the present invention.
Fig. 21 is a schematic block diagram of a device for indicating random access occasion resource information illustrated according to an embodiment of the present invention.
Fig. 22 is a schematic block diagram of a device for determining random access occasion resource information illustrated according to an embodiment of the present invention.

### DETAILED DESCRIPTION

The following will provide a clear and complete description of the technical solution in embodiments of the present invention, in conjunction with the accompanying drawings. Obviously, the described embodiments are only a part of embodiments of the present invention, not the entire embodiments. Based on the embodiments disclosed in this invention, all other embodiments obtained by ordinary technical personnel in this field without creative labor fall within the scope of protection of this invention.

The terms used in this invention are for the sole purpose of describing specific embodiments and are not intended to limit this invention. The singular forms "a", "the" and "said" used in this invention and the accompanying claims are also intended to include the plural form, unless the context clearly indicates otherwise. It should also be understood that the term "and/or" used in this article refers to and includes any or all possible combinations of at least one associated listed item.

It should be understood that although various information may be described using terms such as first, second, third, etc. in this invention, such information should not be limited to these terms. These terms are only used to distinguish information for the same type from each other. For example, without departing from the scope of this invention, the first information can also be referred to as the second information, and similarly, the second information can also be referred to as the first information. Depending on the context, the word "if" used here can be interpreted as "when... ... " or "in case that... ... " or "in response to determine ... ... ".

For the purpose of simplicity and ease of understanding, the terms used in this article to represent size relationships are "greater than" or "less than", "higher than" or "lower than". But for technical personnel in this field, it can be understood that the term "greater than" also encompasses the meaning of "greater than or equal to", and "less than" also encompasses the meaning of "less than or equal to"; the term "higher than" encompasses the meaning of "higher than or equal to", while "lower than" also encompasses the meaning of "lower than or equal to".

After initiating the 2-step CFRA, the terminal needs to initiate the CFRA at the random access occasion (RO, also known as the physical random access channel occasion). Therefore, the terminal first needs to determine RO resource information for the 2-step CFRA.

In general, the RO resource information for the two-step CFRA is indicated in the CFRA configuration through the information element occasionsTwoStepRA. The information element occasionsTwoStepRA further includes two parts: one is the RO configuration information, indicated through rach-ConfigGenericTwoStepRA, and the other is the correspondence between synchronization signal block (SSB) and RO, indicated through ssb-PerRACH-OcassionTwoStepRA. The terminal can determine the RO for initiating the two-step CFRA based on these two parts.

However, in some cases, the network side does not indicate complete RO resource information in the CFRA configuration information.

For example, the entire RO resource information is not indicated, that is, in the CFRA configuration information, the information element ocassionsTwoStepRA is absent. In this case, the terminal can use the RO resources in the configuration information for the two-step CBRA.

For example, the RO configuration information in the RO resource information is not indicated, that is, in the CFRA configuration information, rach-ConfigGenericTwoStepRA in the information element occlusionsTwoStepRA is absent. In this case, the terminal can use the RO configuration information in the RO resource information in the configuration information for the 4-step CBRA.

However, with the development of communication technology, application scenarios have also expanded. For example, in Release 17, in order to adapt to the features of different scenarios, such as slicing, small data transmission (SDT), coverage enhancement (CE), and reduced capability device (Redcap), different CBRA configuration information can be configured for different features, that is, the terminal will be configured with RO resource information for CBRA in Release 17. The RO resource information for 2-step CBRA in the Release 17 can include multiple RO resource information for the CBRA, such as multiple RO resource information for 2-step CBRA and multiple RO resource information for the 4-step CBRA.

The terminal will also be configured with RO resource information for CBRA in legacy releases, such as RO resource information for CBRA in Releases 15 and 16. In the legacy release, the network side device does not configure different CBRA configuration information for the terminal based on the features, but only configures one RO resource information for the 2-step CBRA and one RO resource information for the 4-step CBRA.

Then, for the terminal, when the RO resource information for CBRA in the legacy release and the RO resource information for CBRA in the Release 17 are configured, there is RO resource information for CBRA in multiple releases. When faced with RO resource information for CBRA in multiple releases, the terminal will find it difficult to determine RO resource information for CBRA in which release to be used to determine the RO resource information for the two-step CFRA. The following embodiments disclosed herein are mainly proposed to solve the technical problem.

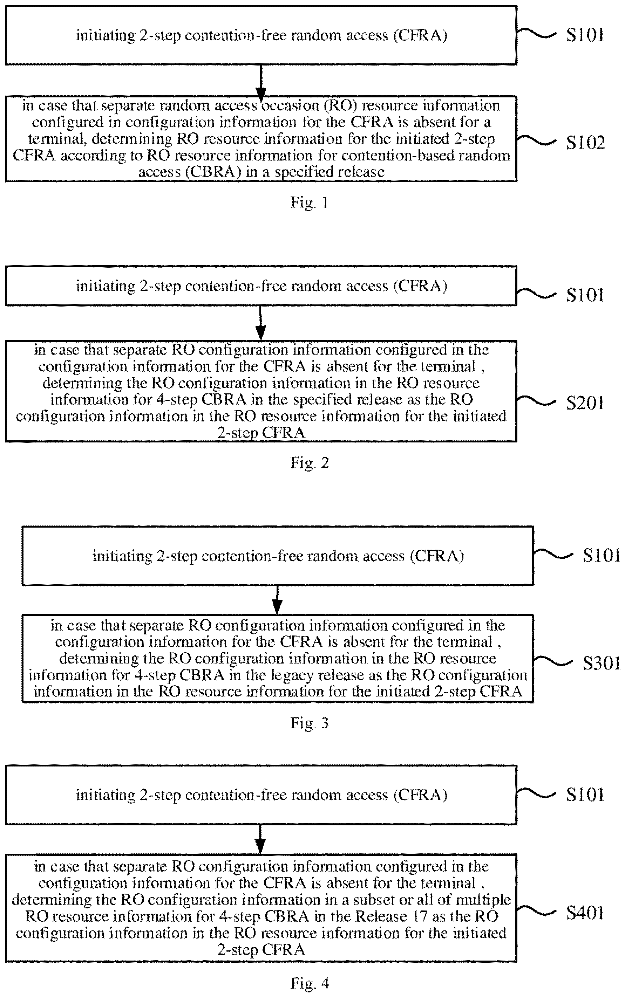

Fig. 1 is a schematic flowchart of a method for determining random access occasion resource information illustrated according to an embodiment of the present invention. The method for determining random access occasion resource information shown in this embodiment can be applicable to a terminal, which includes but is not limited to a communication device such as a mobile phone, a tablet, a wearable device, a sensor, and an IoT device. The terminal can communicate with a network side device, including but not limited to a network side device in communication systems such as 4G, 5G, 6G, etc., such as a base station, a core network, etc.

As shown in Fig. 1, the method for determining random access occasion resource information may include following steps.

In step S101, 2-step contention-free random access (CFRA) is initiated.

In step S 102, in case that separate random access occasion (RO) resource information configured in configuration information for the CFRA is absent for the terminal, RO resource information for the initiated 2-step CFRA is determined according to RO resource information for a contention-based random access (CBRA) in a specified release.

In one embodiment, the terminal may initiate the 2-step CFRA in certain circumstances, wherein the method of initiating the 4-step CFRA includes Handover command initiating.

After initiating the two-step CFRA, the terminal needs to determine the RO resource information for the two-step CFRA. For example, in the CFRA configuration information, it is determined whether separate RO resource information is absent for the terminal. If separate RO resource information is present for the terminal, the terminal can determine the RO for initiating the two-step CFRA based on the separate RO resource information for the terminal. If separate RO resource information is absent for the terminal, the RO resource information for the initiated two-step CFRA can be determined based on the RO resource information for the two-step CBRA or RO resource information for the 4-step CBRA.

According to embodiments of the present invention, the terminal can determine the RO resource information for the initiated two-step CFRA based on RO resource information for CBRA in the specified release. Therefore, even if the terminal is configured with the RO resource information for CBRA in the legacy release and the RO resource information for CBRA in the Release 17, it can accurately determine RO resource information for CBRA in which release to be used in determining the RO resource information for the initiated two-step CFRA, avoiding the technical problem of being difficult for the terminal to determine RO resource information for CBRA in which release to be used to determine RO resource information for the two-step CFRA when facing RO resource information for CBRA in multiple releases.

In one embodiment, the specified release is determined according to an indication from the network side device, or determined according to a protocol agreement.

The terminal can determine the specified release based on the indication from the network side device. For example, if the specified release indicated by the network side device is R17, the terminal can determine the RO resource information for the initiated two-step CFRA based on the RO resource information for the CBRA in the Release 17. For example, if the specified release indicated by the network side device is legacy, the terminal determines the RO resource information for the initiated two-step CFRA based on the RO resource information for CBRA in the legacy release.

The terminal can also determine the specified release according to the protocol agreement. For example, if the specified release is R17 according to the protocol agreement, the terminal will determine the RO resource information for the initiated two-step CFRA based on the RO resource information for the CBRA in the Release 17. For example, if the specified release agreed in the protocol is legacy, the terminal determines the RO resource information for the initiated two-step CFRA based on the RO resource information for CBRA in the legacy release.

In one embodiment, the specified release includes at least one of legacy release or Release 17. In one embodiment, the legacy release includes at least one of Release 15 or Release 16.

In one embodiment, the RO resource information includes at least one of:
RO configuration information;
a correspondence between synchronization signal block (SSB) and RO.

In one embodiment, the RO resource information may include two parts: the RO configuration information and the correspondence between SSB and RO. The terminal determines the RO resource information for the initiated two-step CFRA according to the RO resource information for CBRA in the specified release, including two corresponding situations: one is to determine the RO configuration information in the RO resource information for the initiated two-step CFRA, and the other is to determine the correspondence between SSB and RO in the RO resource information for the two-step CFRA.

Correspondingly, if the configuration information for CFRA does not include the separate RO resource information for the terminal, there are also two situations. One is that only the RO configuration information is absent in the RO resource information; and the other is that the entire RO resource information is absent.

In the case where only the RO configuration information in the RO resource information is absent, it is necessary to determine the RO configuration information in the RO resource information for the initiated two-step CFRA. For example, the RO configuration information in the RO resource information for the initiated two-step CFRA can be determined based on the RO configuration information in the RO resource information for the two-step CBRA.

In the case where the entire RO resource information is absent, it is necessary to determine the RO configuration information and the correspondence between SSB and RO in the RO resource information for the initiated two-step CFRA. For example, the RO configuration information in the RO resource information for the initiated two-step CFRA can be determined based on the RO configuration information in the RO resource information for the 4-step CBRA. How to determine the correspondence between SSB and RO will be explained in subsequent embodiments.

The following embodiments will illustrate how to determine the RO configuration information in the RO resource information for the initiated two-step CFRA based on the RO configuration information in the RO resource information for the 4-step CBRA.

Fig. 2 is a schematic flowchart of another method for determining random access occasion resource information illustrated according to an embodiment of the present invention. As shown in Fig. 2, the RO resource information includes RO configuration information, and in case that separate RO resource information configured in the configuration information for CFRA is absent for the terminal, determining the RO resource information for the initiated two-step CFRA based on the RO resource information for the CBRA in the specified release includes:
in step S201, determining the RO configuration information in the RO resource information for the 4-step CBRA in the specified release as the RO configuration information in the RO resource information for the initiated 2-step CFRA, in case that separate RO configuration information configured in the configuration information for CFRA is absent for the terminal.

In one embodiment, the RO resource information includes RO configuration information, which means that separate RO resource information configured in the configuration information for CFRA being absent for the terminal at least includes separate RO configuration information in the RO resource information configured in the configuration information for CFRA for the terminal being absent for the terminal.

In this case, the terminal can determine the RO configuration information in the RO resource information for the 4-step CBRA in the specified release as the RO configuration information in the RO resource information for the initiated 2-step CFRA.

Fig. 3 is a schematic flowchart of another method for determining random access occasion resource information illustrated according to an embodiment of the present invention. As shown in Fig. 3, determining the RO configuration information in the RO resource information for the 4-step CBRA in the specified release as the RO configuration information in the RO resource information for the initiated 2-step CFRA includes:
in step S301, determining the RO configuration information in the RO resource information for the 4-step CBRA in the legacy release as the RO configuration information in the RO resource information for the initiated 2-step CFRA.

In one embodiment, the specified release may be a legacy release, and the terminal can determine the RO configuration information in the RO resource information for the 4-step CBRA in the legacy release as the RO configuration information in the RO resource information for the initiated 2-step CFRA.

Fig. 4 is a schematic flowchart of yet another method for determining random access occasion resource information illustrated according to an embodiment of the present invention. As shown in Fig. 4, determining the RO configuration information in the RO resource information for the 4-step CBRA in the specified release as the RO configuration information in the RO resource information for the initiated 2-step CFRA includes:
in step S401, in the multiple RO resource information for the 4-step CBRA in Release 17, determining the RO configuration information in the subset or all of the resource information as the RO configuration information in the RO resource information for the initiated 2-step CFRA.

In one embodiment, the specified release may be the Release 17. As different CBRA configuration information can be configured for different features in the Release 17, the terminal can be configured with multiple RO resource information for the 4-step CBRA in the Release 17.

In this case, in the multiple RO resource information for the 4-step CBRA in Release 17, the terminal can determine the RO configuration information in a subset of the resource information (which may be one or more) as the RO configuration information in the RO resource information for the initiated 2-step CFRA; or can determine the RO configuration information in all of the resource information as the RO configuration information in the RO resource information for the initiated two-step CFRA.

In the multiple RO resource information for the 4-step CBRA in Release 17, the terminal determines the RO configuration information in the subset of resource information as the RO configuration information in the RO resource information for the initiated 2-step CFRA. The subset of resource information can be determined based on the predefined 4-step CBRA configuration information list in the Release 17. For example, multiple RO configuration information is arranged in order in the list. The subset of resource information may be the first n configuration information in the list, where n is an integer greater than or equal to 1.

In addition, the terminal determines the RO configuration information in all of resource information as the RO configuration information in the RO resource information for the initiated two-step CFRA, which means that the ROs configured by the RO configuration information in all resource information are available to the terminal.

In one embodiment, in the multiple RO resource information for the 4-step CBRA in the Release 17, determining the RO configuration information in the subset or all of the resource information as the RO configuration information in the RO resource information for the initiated 2-step CFRA includes:
when receiving an indication from a network side device indicating to determine the RO resource information for the initiated 2-step CFRA according to the RO resource information for the 4-step CBRA in the Release 17, determining the RO configuration information in the subset or all of the multiple RO resource information for the 4-step CBRA in the Release 17 as the RO configuration information in the RO resource information for the initiated 2-step CFRA.

The method further includes:
when not receiving an indication from the network side device indicating to determine the RO resource information for the initiated 2-step CFRA according to the RO resource information for the 4-step CBRA in the Release 17, determining the RO configuration information in the RO resource information for the initiated 2-step CFRA according to the RO configuration information in the RO resource information for the 4-step CBRA in the legacy release.

In one embodiment, the terminal can determine based on the indication from the network side device, whether to determine the RO configuration information in the subset or all of the multiple RO resource information for the 4-step CBRA in Release 17 as the RO configuration information in the RO resource information for the initiated 2-step CFRA.

For example, when receiving the indication from the network side device indicating to determine the RO resource information for the initiated 2-step CFRA according to the RO resource information for the 4-step CBRA in the Release 17, the terminal can determine the RO configuration information in the subset or all of the multiple RO resource information for the 4-step CBRA in the Release 17 as the RO configuration information in the RO resource information for the initiated 2-step CFRA.

When not receiving the indication from the network side device indicating to determine the RO resource information for the initiated 2-step CFRA according to the RO resource information for the 4-step CBRA in the Release 17, the terminal can determine the RO configuration information in the RO resource information for the initiated 2-step CFRA according to the RO configuration information in the RO resource information for the 4-step CBRA in the legacy release.

In one embodiment, determining the RO configuration information in the subset or all of the multiple RO resource information for the 4-step CBRA in the Release 17 as the RO configuration information in the RO resource information for the initiated 2-step CFRA includes:
when the terminal supports determining the RO configuration information in the RO resource information for the initiated 2-step CFRA according to the RO configuration information in the RO resource information for the 4-step CBRA in the Release 17, determining the RO configuration information in the subset or all of the multiple RO resource information for the 4-step CBRA in the Release 17 as the RO configuration information in the RO resource information for the initiated 2-step CFRA.

The method further includes:
when the terminal does not support determining the RO resource information for the initiated 2-step CFRA according to the RO resource information for the 4-step CBRA in the Release 17, determining the RO configuration information in the RO resource information for the initiated 2-step CFRA according to the RO configuration information in the RO resource information for the 4-step CBRA in the legacy release.

In one embodiment, the terminal can determine according to its own capability, whether to determine the RO configuration information in the subset or all of the multiple RO resource information for the 4-step CBRA in the Release 17 as the RO configuration information in the RO resource information for the initiated 2-step CFRA.

For example, when the terminal has the capability to determine the RO resource information for the initiated 2-step CFRA according to the RO resource information for the 4-step CBRA in the Release 17, it can determine the RO configuration information in the subset or all of the multiple RO resource information for the 4-step CBRA in the Release 17 as the RO configuration information in the RO resource information for the initiated 2-step CFRA.

When the capability of the terminal does not support determining the RO resource information for the initiated 2-step CFRA according to the RO resource information for the 4-step CBRA in the Release 17, the terminal can determine the RO configuration information in the RO resource information for the initiated 2-step CFRA according to the RO configuration information in the RO resource information for the 4-step CBRA in the legacy release.

In one embodiment, the capabilities of the terminal may also include its support for features such as Slicing, SDT, CE, Redcap, etc. The terminal can determine the features supported by its own capabilities in the features, and then the terminal can determine one or more RO resource information for the 4-step CBRA corresponding to the supported features in the multiple RO resource information for the 4-step CBRA in Release 17, and then determine the determined one or more RO resource information for the 4-step CBRA as the RO configuration information in the RO resource information for the initiated 2-step CFRA.

For example, if the network side device configures the RO resource information for four 4-step CBRAs in Release 17 for the four features of Slicing, SDT, CE, and Redcap, and the capability of the terminal only supports the CE and Redcap features, then the terminal can determine the two RO resource information for the 4-step CBRA corresponding to the CE and Redcap features in the four RO resource information for the 4-step CBRA in Release 17, and then determine the determined two RO resource information for the two 4-step CBRA as the RO configuration information in the RO resource information for the initiated two-step CFRA.

In one embodiment, determining the RO configuration information in the subset or all of the multiple RO resource information for the 4-step CBRA in the Release 17 as the RO configuration information in the RO resource information for the initiated 2-step CFRA includes:
determining the RO configuration information in the subset or all of the multiple RO resource information for the 4-step CBRA in the Release 17 as the RO configuration information in the RO resource information for the initiated 2-step CFRA according to an implementation of the terminal.

For example, if the terminal determines based on its own implementation, not to determine the RO configuration information in the subset or all of the multiple RO resource information for the 4-step CBRA in the Release 17 as the RO configuration information in the RO resource information for the initiated 2-step CFRA, then it can determine RO configuration information in the RO resource information for the initiated 2-step CFRA according to the RO configuration information in the RO resource information for the 4-step CBRA in the legacy release.

For example, according to its own implementation, the terminal can determine the RO configuration information in the subset of the multiple RO resource information for the 4-step CBRA in the Release 17 as the RO configuration information in the RO resource information for the initiated 2-step CFRA.

For example, according to its own implementation, the terminal can determine the RO configuration information in all of the multiple RO resource information for the 4-step CBRA in the Release 17 as the RO configuration information in the RO resource information for the initiated 2-step CFRA.

It should be noted that in terms of terminal implementation, it can be combined with embodiments such as indication from the network side device mentioned earlier. For example, the network side device indicates the terminal to determine the RO configuration information in the subset or all of the multiple RO resource information for the 4-step CBRA in Release 17 as the RO configuration information in the RO resource information for the initiated two-step CFRA, and the terminal can select one from the multiple RO resource information for the 4-step CBRA in the Release 17 or determine the RO configuration information in the multiple RO resource information for the 4-step CBRA in the Release 17 as the RO configuration information in the RO resource information for the initiated 2-step CFRA according to its own implementation.

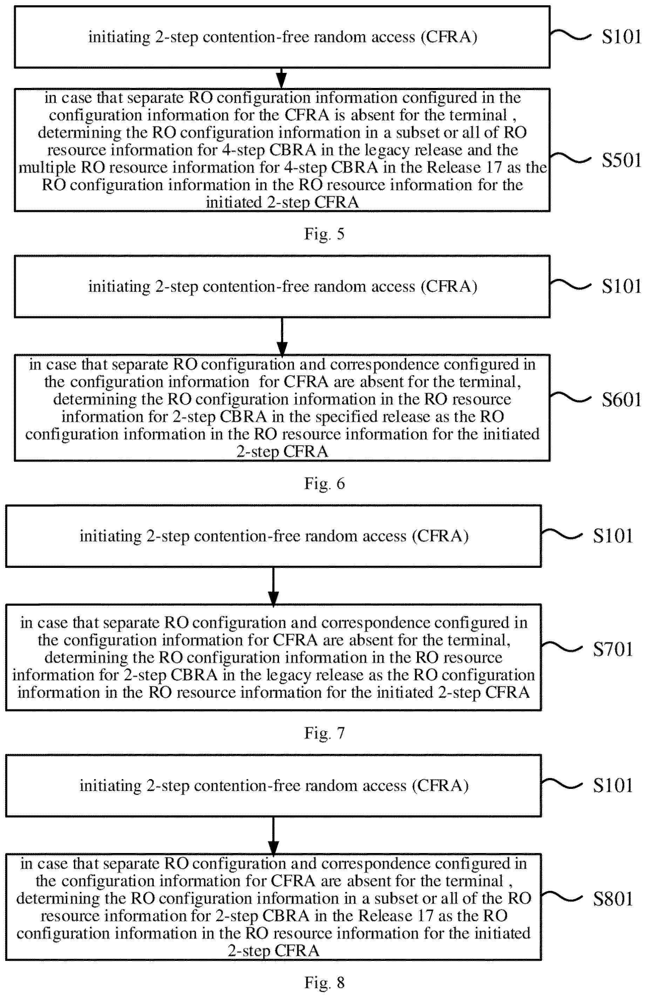

Fig. 5 is a schematic flowchart of yet another method for determining random access occasion resource information illustrated according to an embodiment of the present invention. As shown in Fig. 5, determining the RO configuration information in the RO resource information for the 4-step CBRA in the specified release as the RO configuration information in the RO resource information for the initiated 2-step CFRA includes:
in step S501, determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

In one embodiment, the specified release may include legacy release and Release 17. Since different CBRA configuration information can be configured for different features in the Release 17, the terminal can be configured with multiple RO resource information for the 4-step CBRA in the Release 17.

In this case, in the RO resource information for the 4-step CBRA in the legacy release and the multiple RO resource information for the 4-step CBRA in the Release 17, the terminal can determine the RO configuration information in the subset of the resource information (may be one or more) as the RO configuration information in the RO resource information for the initiated 2-step CFRA; or the terminal can determine the RO configuration information in all of the resource information as the RO configuration information in the RO resource information for the initiated two-step CFRA.

When the terminal at least determines the RO configuration information in the subset of multiple RO resource information for the 4-step CBRA in the Release 17 as the RO configuration information in the RO resource information for the initiated 2-step CFRA, the subset of resource information can be determined based on the predefined 4-step CBRA configuration information list in the Release 17. For example, multiple RO configuration information is arranged in order in the list, and the subset of resource information may be the first n configuration information in the list, where n is an integer greater than or equal to 1.

In addition, the terminal determines the RO configuration information in all of the resource information as the RO configuration information in the RO resource information for the initiated two-step CFRA, which means that the RO configured by the RO configuration information in all resource information is available to the terminal.

In one embodiment, determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA includes:
when receiving an indication from a network side device indicating to determine the RO resource information for the initiated 2-step CFRA according to the RO resource information for the 4-step CBRA in the legacy release and the multiple RO resource information for the 4-step CBRA in the Release 17, determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

The method further includes:
when not receiving an indication from a network side device indicating to determine the RO resource information for the initiated 2-step CFRA according to the RO resource information for the 4-step CBRA in the Release 17, determining the RO configuration information in the RO resource information for the initiated 2-step CFRA according to the RO configuration information in the RO resource information for the 4-step CBRA in the legacy release.

In one embodiment, the terminal can determine according to the indication from the network side device, whether to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

For example, when receiving the indication from the network side device indicating to determine the RO resource information for the initiated 2-step CFRA according to the RO resource information for the 4-step CBRA in the legacy release and the RO resource information for the 4-step CBRA in the Release 17, the terminal can determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

When not receiving the indication from the network side device indicating to determine the RO resource information for the initiated 2-step CFRA according to the RO resource information for the 4-step CBRA in the Release 17, the terminal can determine the RO configuration information in the RO resource information for the initiated 2-step CFRA according to the RO configuration information in the RO resource information for the 4-step CBRA in the legacy release.

In one embodiment, determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA includes:
in case that the terminal supports determining the RO configuration information in the RO resource information for the initiated 2-step CFRA according to the RO configuration information in the RO resource information for the 4-step CBRA in the Release 17, determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

The method further includes:
in case that the terminal does not support determining the RO resource information for the initiated 2-step CFRA according to the RO resource information for the 4-step CBRA in the Release 17, determining the RO configuration information in the RO resource information for the initiated 2-step CFRA according to the RO configuration information in the RO resource information for the 4-step CBRA in the legacy release.

In one embodiment, the terminal can determine according to its own capability, whether to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

For example, when it has the capability to support determining the RO resource information for the initiated 2-step CFRA according to the RO resource information for the 4-step CBRA in the Release 17, it can determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

However, when its own capability does not support determining the RO resource information for the initiated 2-step CFRA according to the RO resource information for the 4-step CBRA in the Release 17, it can determine the RO configuration information in the RO resource information for the initiated 2-step CFRA only according to the RO configuration information in the RO resource information for the 4-step CBRA in the legacy release.

In one embodiment, the capabilities of the terminal may also include its support for features such as Slicing, SDT, CE, Redcap, etc. The terminal can determine the features supported by its own capabilities in the features. When the terminal determines RO resource information for the initiated two-step CFRA based on at least the RO resource information for a 4-step CFRA in the Release 17, the terminal can determine one or more RO resource information for the 4-step CBRA corresponding to the supported features in multiple RO resource information for the 4-step CBRA in the Release 17, and then determine the determined one or more RO resource information for the 4-step CBRA as the RO configuration information in the RO resource information for the initiated two-step CFRA.

For example, if the network side device configures four RO resource information for the 4-step CBRA in Release 17 for the four features of Slicing, SDT, CE, and Redcap, and the capability of the terminal only supports the CE and Redcap features, then the terminal can determine two RO resource information for the 4-step CBRA corresponding to the CE and Redcap features in the four RO resource information for the 4-step CBRA in Release 17, and then determine the determined two RO resource information for the 4-step CBRA as the RO configuration information in the RO resource information for the initiated two-step CFRA.

In one embodiment, determining the RO configuration information in the subset or all of the multiple RO resource information for the 4-step CBRA in the Release 17 as the RO configuration information in the RO resource information for the initiated 2-step CFRA includes:
determining the RO configuration information in the subset or all of the RO resource information for the CBRA in the legacy release and the multiple RO resource information for the 4-step CBRA in the Release 17 as the RO configuration information in the RO resource information for the initiated 2-step CFRA according to implementation of the terminal.

For example, the implementation of the terminal itself may be to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

For example, the implementation of the terminal itself may be to determine the RO configuration information in the subset or all of only the multiple RO resource information for the 4-step CBRA in the Release 17 as the RO configuration information in the RO resource information for the initiated 2-step CFRA.

For example, the implementation of the terminal itself may be to determine the RO configuration information in the RO resource information for the initiated 2-step CFRA only according to the RO resource information for the 4-step CBRA in the legacy release.

The following examples illustrate how to determine the RO resource information for the initiated two-step CFRA when the entire RO resource information is absent.

Fig. 6 is a schematic flowchart of yet another method for determining random access occasion resource information illustrated according to an embodiment. As shown in Fig. 6, the RO resource information includes RO configuration information and the correspondence, and in case that separate RO resource information configured in the configuration information for CFRA is absent for the terminal, determining the RO resource information for the initiated 2-step CFRA according to the RO resource information for CBRA in the specified release includes:
in step S601, in case that separate RO configuration and correspondence configured in the configuration information for CFRA are absent for the terminal, determining the RO configuration information in the RO resource information for the 2-step CBRA in the specified release as the RO configuration information in the RO resource information for the initiated 2-step CFRA.

In one embodiment, the RO resource information includes the RO configuration information and the correspondence. That is, separate RO configuration and correspondence configured in the configuration information for the CFRA are absent for the terminal. In this case, the terminal can determine the RO configuration information in the RO resource information for the 2-step CBRA in the specified release as the RO configuration information in the RO resource information for the initiated 2-step CFRA.

Fig. 7 is a schematic flowchart of yet another method for determining random access occasion resource information illustrated according to an embodiment. As shown in Fig. 7, determining the RO configuration information in the RO resource information for the 2-step CBRA in the specified release as the RO configuration information in the RO resource information for the initiated 2-step CFRA includes:
in step S701, determining the RO configuration information in the RO resource information for the 2-step CBRA in the legacy release as the RO configuration information in the RO resource information for the initiated 2-step CFRA.

In one embodiment, the specified release may be the legacy release, and the terminal can determine the RO configuration information in the RO resource information for the 2-step CBRA in the legacy release as the RO configuration information in the RO resource information for the initiated 2-step CFRA.

Fig. 8 is a schematic flowchart of yet another method for determining random access occasion resource information illustrated according to an embodiment. As shown in Fig. 8, determining the RO configuration information in the RO resource information for the 2-step CBRA in the specified release as the RO configuration information in the RO resource information for the initiated 2-step CFRA includes:
in step S801, determining the RO configuration information in the subset or all of the multiple RO resource information for the 2-step CBRA in the Release 17 as the RO configuration information in the RO resource information for the initiated 2-step CFRA.

In one embodiment, the specified release may be the Release 17. Since different CBRA configuration information can be configured for different features in the Release 17, the terminal can be configured with multiple RO resource information for 2-step CBRA in the Release 17.

In this case, in the multiple RO resource information for the 2-step CBRA in the Release 17, the terminal can determine the RO configuration information in the subset of the resource information (may be one or more) as the RO configuration information in the RO resource information for the initiated 2-step CFRA; or the terminal can determine the RO configuration information in all of the resource information as the RO configuration information in the RO resource information for the initiated two-step CFRA.

When the terminal determines the RO configuration information in the subset of the multiple RO resource information for the 2-step CBRA in the Release 17 as the RO configuration information in the RO resource information for the initiated 2-step CFRA, the subset of the resource information can be determined based on the predefined 2-step CBRA configuration information list in the Release 17. For example, multiple RO configuration information is arranged in order in the list, and the subset of the resource information may be the first n configuration information in the list, where n is an integer greater than or equal to 1.

In addition, the terminal determines the RO configuration information in all of the resource information as the RO configuration information in the RO resource information for the initiated two-step CFRA, which means that the RO configured by the RO configuration information in all of the resource information is available to the terminal.

In one embodiment, determining the RO configuration information in the subset or all of the multiple RO resource information for the 2-step CBRA in the Release 17 as the RO configuration information in the RO resource information for the initiated 2-step CFRA includes:
when receiving an indication from a network side device indicating to determine the RO resource information for the initiated 2-step CFRA according to the RO resource information for the 2-step CBRA in the Release 17, determining the RO configuration information in the subset or all of the multiple RO resource information for the 2-step CBRA in the Release 17 as the RO configuration information in the RO resource information for the initiated 2-step CFRA.

The method further includes:
when not receiving an indication from a network side device indicating to determine the RO resource information for the initiated 2-step CFRA according to the RO resource information for the 2-step CBRA in the Release 17, determining the RO configuration information in the RO resource information for the initiated 2-step CFRA according to the RO configuration information in the RO resource information for the 2-step CBRA in the legacy release.

In one embodiment, the terminal can determine according to the indication from the network side device, whether to determine the RO configuration information in the subset or all of the multiple RO resource information for the 2-step CBRA in the Release 17 as the RO configuration information in the RO resource information for the initiated 2-step CFRA.

For example, when receiving the indication from the network side device indicating to determine the RO resource information for the initiated 2-step CFRA according to the RO resource information for the 2-step CBRA in the Release 17, the terminal can determine the RO configuration information in the subset or all of the multiple RO resource information for the 2-step CBRA in the Release 17 as the RO configuration information in the RO resource information for the initiated 2-step CFRA.

When not receiving the indication from the network side device indicating to determine the RO resource information for the initiated 2-step CFRA according to the RO resource information for the 2-step CBRA in the Release 17, the terminal can determine the RO configuration information in the RO resource information for the initiated 2-step CFRA according to the RO configuration information in the RO resource information for the 2-step CBRA in the legacy release.

In one embodiment, determining the RO configuration information in the subset or all of the multiple RO resource information for the 2-step CBRA in the Release 17 as the RO configuration information in the RO resource information for the initiated 2-step CFRA includes:
in case that the terminal supports determining the RO configuration information in the RO resource information for the initiated 2-step CFRA according to the RO configuration information in the RO resource information for the 2-step CBRA in the Release 17, determining the RO configuration information in the subset or all of the multiple RO resource information for the 2-step CBRA in the Release 17 as the RO configuration information in the RO resource information for the initiated 2-step CFRA.

The method further includes:
in case that the terminal does not support determining the RO resource information for the initiated 2-step CFRA according to the RO resource information for the 2-step CBRA in the Release 17, determining the RO configuration information in the RO resource information for the initiated 2-step CFRA according to the RO configuration information in the RO resource information for the 2-step CBRA in the legacy release.

In one embodiment, the terminal can determine according to its own capability, whether to determine the RO configuration information in the subset or all of the multiple RO resource information for the 2-step CBRA in the Release 17 as the RO configuration information in the RO resource information for the initiated 2-step CFRA.

For example, when it has the capability to support determining the RO resource information for the initiated 2-step CFRA according to the RO resource information for the 2-step CBRA in the Release 17, it can determine the RO configuration information in the subset or all of the multiple RO resource information for the 2-step CBRA in the Release 17 as the RO configuration information in the RO resource information for the initiated 2-step CFRA.

However, when its own capability does not support determining the RO resource information for the initiated 2-step CFRA according to the RO resource information for the 2-step CBRA in the Release 17, it can determine the RO configuration information in the RO resource information for the initiated 2-step CFRA according to the RO configuration information in the RO resource information for the 2-step CBRA in the legacy release.

In one embodiment, the capabilities of the terminal may also include its support for features such as Slicing, SDT, CE, Redcap, etc. The terminal can determine the features supported by its own capabilities in the features. Then, the terminal can determine one or more RO resource information for 2-step CBRA corresponding to the supported features in multiple RO resource information for the 2-step CBRA in the Release 17, and then determine the determined one or more RO resource information for the 2-step CBRA as the RO configuration information in the RO resource information for the initiated two-step CFRA.

For example, if the network side device configures four RO resource information for the 2-step CBRA in Release 17 for the four features of Slicing, SDT, CE, and Redcap, and the capability of the terminal only supports the CE and Redcap features, then the terminal can determine the two RO resource information for 2-step CBRA corresponding to the CE and Redcap features in the four RO resource information for the 2-step CBRA in Release 17, and then determine the determined two RO resource information for the 2-step CBRA as the RO configuration information in the RO resource information for the initiated two-step CFRA.

In one embodiment, determining the RO configuration information in the subset or all of the multiple RO resource information for the 2-step CBRA in the Release 17 as the RO configuration information in the RO resource information for the initiated 2-step CFRA includes:
determining the RO configuration information in the subset or all of the multiple RO resource information for the 2-step CBRA in the Release 17 as the RO configuration information in the RO resource information for the initiated 2-step CFRA according to implementation of the terminal.

For example, if the terminal determines according to its own implementation, not to determine the RO configuration information in the subset or all of the multiple RO resource information for the 2-step CBRA in the Release 17 as the RO configuration information in the RO resource information for the initiated 2-step CFRA, it can determine the RO configuration information in the RO resource information for the initiated 2-step CFRA according to the RO configuration information in the RO resource information for the 2-step CBRA in the legacy release.

For example, the terminal can determine the RO configuration information in the subset of the multiple RO resource information for the 2-step CBRA in the Release 17 as the RO configuration information in the RO resource information for the initiated 2-step CFRA according to its own implementation.

For example, the terminal can determine the RO configuration information in all of the multiple RO resource information for the 2-step CBRA in the Release 17 as the RO configuration information in the RO resource information for the initiated 2-step CFRA according to its own implementation.

It should be noted that in terms of terminal implementation, it can be combined with embodiments such as indication from the network side device mentioned earlier. For example, the network side device indicates the terminal to determine the RO configuration information in the subset or all of the multiple RO resource information for the 4-step CBRA in the Release 17 as the RO configuration information in the RO resource information for the initiated 2-step CFRA, and the terminal can select one from the multiple RO resource information for the 4-step CBRA in the Release 17 or determine the RO configuration information in the multiple RO resource information for the 4-step CBRA in the Release 17 as the RO configuration information in the RO resource information for the initiated 4-step CFRA.

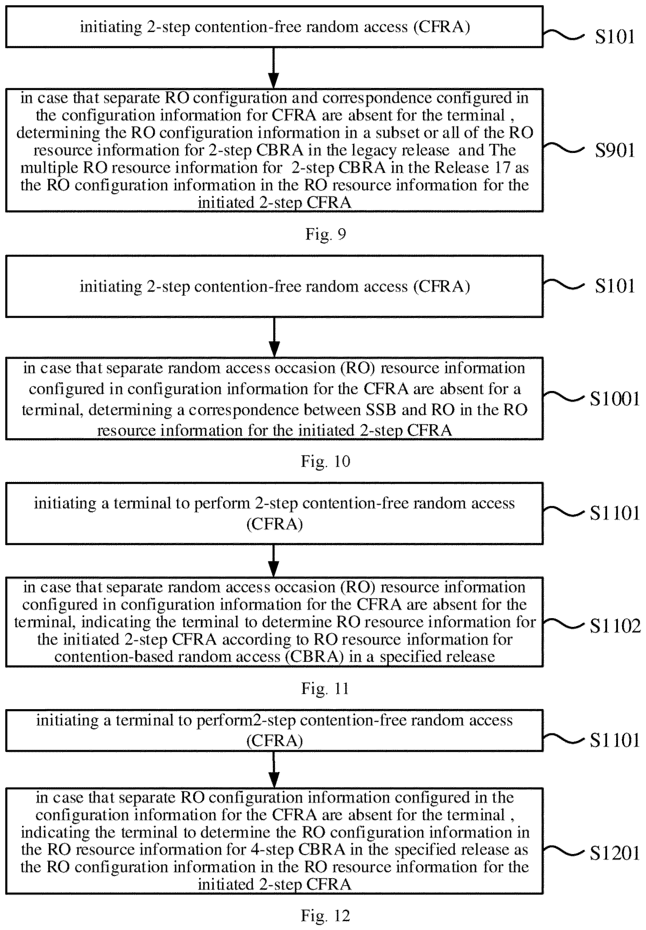

Fig. 9 is a schematic flowchart of yet another method for determining random access occasion resource information illustrated according to an embodiment. As shown in Fig. 9, determining the RO configuration information in the RO resource information for the 2-step CBRA in the specified release as the RO configuration information in the RO resource information for the initiated 2-step CFRA includes:
in step S901, determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

In one embodiment, the specified release may include the legacy release and the Release 17. Since different CBRA configuration information can be configured for different features in the Release 17, the terminal can be configured with multiple RO resource information for 2-step CBRA in the Release 17.

In this case, in the RO resource information for the 2-step CBRA in the legacy release and the multiple RO resource information for the 2-step CBRA in the Release 17, the terminal can determine the RO configuration information in the subset of resource information (may be one or more) as the RO configuration information in the RO resource information for the initiated 2-step CFRA; or the terminal can determine the RO configuration information in all of the resource information as the RO configuration information in the RO resource information for the initiated two-step CFRA.

When the terminal at least determines the RO configuration information in the subset of multiple RO resource information for the 2-step CBRA in the Release 17 as the RO configuration information in the RO resource information for the initiated 2-step CFRA, the subset of resource information can be determined based on the predefined 2-step CBRA configuration information list in the Release 17. For example, multiple RO configuration information is arranged in order in the list, and the subset of resource information may be the first n configuration information in the list, where n is an integer greater than or equal to 1.

In addition, the terminal determines the RO configuration information in all of the resource information as the RO configuration information in the RO resource information for the initiated two-step CFRA, which means that the RO configured by the RO configuration information in all of the resource information is available to the terminal.

In one embodiment, determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA includes:
when receiving an indication from a network side device indicating to determine the RO resource information for the initiated 2-step CFRA according to the RO resource information for the 2-step CBRA in the legacy release and the RO resource information for the 2-step CBRA in the Release 17, determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

The method further includes:
when not receiving an indication from a network side device indicating to determine the RO resource information for the initiated 2-step CFRA according to the RO resource information for the 2-step CBRA in the legacy release and the RO resource information for the 2-step CBRA in the Release 17, determining the RO configuration information in the RO resource information for the initiated 2-step CFRA according to the RO configuration information in the RO resource information for the 2-step CBRA in the legacy release.

In one embodiment, the terminal can determine according to the indication from the network side device, whether to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

For example, when receiving the indication from the network side device indicating to determine the RO resource information for the initiated 2-step CFRA according to the RO resource information for the 2-step CBRA in the legacy release and the RO resource information for the 2-step CBRA in the Release 17, the terminal can determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

When not receiving the indication from the network side device indicating to determine the RO resource information for the initiated 2-step CFRA according to the RO resource information for the 2-step CBRA in the legacy release and the RO resource information for the 2-step CBRA in the Release 17, the terminal can determine the RO configuration information in the RO resource information for the initiated 2-step CFRA according to the RO configuration information in the RO resource information for the 2-step CBRA in the legacy release.

In one embodiment, determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA includes:
in case that the terminal supports determining the RO configuration information in the RO resource information for the initiated 2-step CFRA according to the RO configuration information in the RO resource information for the 2-step CBRA in the Release 17, determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

The method further includes:
in case that the terminal does not support determining the RO resource information for the initiated 2-step CFRA according to the RO resource information for the 2-step CBRA in the Release 17, determining the RO configuration information in the RO resource information for the initiated 2-step CFRA according to the RO configuration information in the RO resource information for the 2-step CBRA in the legacy release.

In one embodiment, the terminal can determine according to its own capability, whether to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

For example, when it has the capability to support determining the RO resource information for the initiated 2-step CFRA according to the RO resource information for the 2-step CBRA in the Release 17, it can determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

However, when its own capability does not support determining the RO resource information for the initiated 2-step CFRA according to the RO resource information for the 2-step CBRA in the Release 17, it can determine the RO configuration information in the RO resource information for the initiated 2-step CFRA only according to the RO configuration information in the RO resource information for the 2-step CBRA in the legacy release.

In one embodiment, the capabilities of the terminal may also include its support for features such as Slicing, SDT, CE, Redcap, etc. The terminal can determine the features supported by its own capabilities in the features. When the terminal determines the RO resource information for the initiated 2-step CFRA at least according to the RO resource information for the 2-step CFRA in the Release 17, the terminal can determine one or more RO resource information for 2-step CBRA corresponding to the supported features in multiple RO resource information for the 2-step CBRA in the Release 17, and then determine the determined one or more RO resource information for 2-step CBRA as the RO configuration information in the RO resource information for the initiated two-step CFRA.

For example, if the network side device configures four RO resource information for the 2-step CBRA in Release 17 for the four features of Slicing, SDT, CE, and Redcap, and the capability of the terminal only supports the CE and Redcap features, then the terminal can determine the two RO resource information for 2-step CBRA corresponding to the CE and Redcap features in the four RO resource information for the 2-step CBRA in Release 17, and then determine the determined two RO resource information for the 2-step CBRA as the RO configuration information in the RO resource information for the initiated two-step CFRA.

In one embodiment, determining the RO configuration information in the subset or all of the multiple RO resource information for the 2-step CBRA in the Release 17 as the RO configuration information in the RO resource information for the initiated 2-step CFRA includes:

determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA according to implementation of the terminal.

For example, the implementation of the terminal itself may be to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

For example, the implementation of the terminal itself may be to determine the RO configuration information in the subset or all of only the multiple RO resource information for the 2-step CBRA in the Release 17 as the RO configuration information in the RO resource information for the initiated 2-step CFRA.

For example, the implementation of the terminal itself may be to determine the RO configuration information in the RO resource information for the initiated 2-step CFRA only according to the RO resource information for the 2-step CBRA in the legacy release.

Fig. 10 is a schematic flowchart of yet another method for determining random access occasion resource information illustrated according to an embodiment of the present invention. As shown in Fig. 10, in case that separate RO resource information configured in the configuration information for CFRA is absent for the terminal, determining the RO resource information for the initiated 2-step CFRA according to the RO resource information for CBRA in the specified release further includes:

in step S1001, determining a correspondence between SSB and RO in the RO resource information for the initiated 2-step CFRA.

In one embodiment, due to the fact that the RO resource information for the two-step CFRA includes two parts of RO configuration information and the correspondence between SSB and RO, in addition to determine the RO configuration information in the RO resource information for the two-step CFRA, the terminal further needs to determine the correspondence between SSB and RO in the RO resource information for the two-step CFRA. Based on the determined RO configuration information and the correspondence between SSB and RO, the terminal can determine the RO where the two-step CFRA will be performed.

In one embodiment, determining the correspondence between SSB and RO in the RO resource information for the initiated 2-step CFRA includes:

determining the correspondence between SSB and RO in the RO resource information for the 2-step CBRA in the specified release as the correspondence between SSB and RO in the RO resource information for the initiated 2-step CFRA.

After determining the RO configuration information in the RO resource information for CBRA in the specified release as the RO configuration information in the RO resource information for the initiated 2-step CFRA based on the aforementioned embodiments, the terminal can further determine the correspondence between the synchronization signal block SSB and RO in the RO resource information for CBRA in the specified release as the correspondence between SSB and RO in the RO resource information for the initiated two-step CFRA. That is, the RO configuration information and the correspondence between SSB and RO may belong to the same RO resource information.

In one embodiment, determining the correspondence between SSB and RO in the RO resource information for the initiated 2-step CFRA includes:

determining the correspondence between SSB and RO in the RO resource information for the initiated 2-step CFRA according to a correspondence between SSB and RO in the RO resource information for 2-step CBRA in all releases pre-configured by a network side device to the terminal.

After determining the RO configuration information in the RO resource information for CBRA in the specified release as the RO configuration information in the RO resource information for the initiated 2-step CFRA based on the aforementioned embodiments, the terminal can further determine the correspondence between SSB and RO in the RO resource information for the initiated two-step CFRA according to the correspondence between SSB and RO in the RO resource information for CBRA in all releases pre-configured by the network side device to the terminal (not limited to the RO resource information for the CBRA in the specified release).

It should be noted that when there are multiple correspondences between SSB and RO in the RO resource information for CBRA in all releases pre-configured by the network side device to the terminal, the terminal can determine one correspondence between SSB and RO therefrom, wherein the correspondences between SSB and RO are represented by numerical values, such as 1/8, 1/4, 1/2, 1, 2, 4, 8, 16, etc. The terminal can choose one of the values, such as selecting the maximum or minimum value.

In one embodiment, determining the correspondence between SSB and RO in the RO resource information for the initiated 2-step CFRA includes:

determining the correspondence between SSB and RO in the RO resource information for the initiated 2-step CFRA according to a terminal implementation.

The following embodiments describe from the network side how the terminal determines the RO resource information for the initiated two-step CFRA when indicated by the network side device. It should be noted that the indication from network side devices is only one way for the terminal to determine the RO resource information for the initiated two-step CFRA based on the RO resource information for CBRA in the specified release. The terminal can also determine the RO resource information for the initiated two-step CFRA based on the RO resource information for CBRA in the specified release according to the protocol agreement.

Fig. 11 is a schematic flowchart of a method for indicating random access occasion resource information illustrated according to an embodiment of the present invention. The method for indicating random access occasion resource information shown in this embodiment can be performed by a network side device. The network side device can communicate with a terminal, which includes but is not limited to a communication device such as a mobile phone, a tablet, a wearable device, a sensor, and an IoT device. The network side device includes but is not limited to a network side device in communication systems such as 4G, 5G, 6G, etc., such as a base station, a core network, etc.

As shown in Fig. 11, the method for indicating random access occasion resource information may include following steps:
in step S 1101, initiating a terminal to perform 2-step contention-free random access (CFRA);
in step S102, in case that separate random access occasion (RO) resource information configured in configuration information for the CFRA is absent for the terminal, indicating the terminal to determine RO resource information for the initiated 2-step CFRA according to RO resource information for a contention-based random access (CBRA) in a specified release.

In one embodiment, the network side device may initiate the terminal to perform the 2-step CFRA in certain circumstances, wherein the method of initiating the 2-step CFRA includes Handover command initiating.

After the network side device initiates the terminal to perform the two-step CFRA, the terminal needs to determine the RO resource information for the two-step CFRA. For example, in the CFRA configuration information, it is determined whether separate RO resource information is present for the terminal. If separate RO resource information is present for the terminal, the terminal can determine the RO for initiating the two-step CFRA based on the separate RO resource information for the terminal. If separate RO resource information is absent for the terminal, the RO resource information for the initiated two-step CFRA can be determined based on the RO resource information for the CBRA.

According to embodiments of the present invention, the network side device can indicate the terminal to determine the RO resource information for the initiated two-step CFRA based on RO resource information for the CBRA in the specified release. Therefore, even if the terminal is configured with the RO resource information for CBRA in the legacy release and the RO resource information for CBRA in the Release 17, it can enable the terminal to accurately determine RO resource information for CBRA in which release to be used in determining the RO resource information for the initiated two-step CFRA, avoiding the technical problem of being difficult for the terminal to determine RO resource information for CBRA in which release to be used to determine RO resource information for the two-step CFRA when facing RO resource information for CBRA in multiple releases.

In one embodiment, in case that separate RO resource information configured in configuration information for the CFRA is absent for the terminal, indicating the terminal to determine RO resource information for the initiated 2-step CFRA according to RO resource information for CBRA in the specified release includes:
in case that separate RO resource information configured in the configuration information for the CFRA is absent for the terminal, if the terminal has been configured with multiple RO resource information for CBRA, indicating the target RO resource information for CBRA in the multiple RO resource information for the CBRA to be the RO resource information for the initiated 2-step CFRA.

In case that the network side device configures multiple RO resource information for CBRA for the terminal, in addition to indicating the terminal to determine the RO resource information for the initiated 2-step CFRA according to the RO resource information for the CBRA in the specified release, it can also more accurately indicate the terminal to use target RO resource information for the CBRA from the multiple RO resource information for CBRA as the RO resource information for the initiated two-step CFRA.

In one embodiment, the specified release includes at least one of legacy release or Release 17. In one embodiment, the legacy release includes at least one of Release 15 or Release 16.

In one embodiment, the RO resource information includes at least one of:
RO configuration information;
a correspondence between synchronization signal block (SSB) and RO.

In one embodiment, the RO resource information may include two parts: the RO configuration information and the correspondence between SSB and RO. The terminal determines the RO resource information for the initiated two-step CFRA according to the RO resource information for the CBRA in the specified release, including two corresponding situations: one is to determine the RO configuration information in the RO resource information for the initiated two-step CFRA, and the other is to determine the correspondence between SSB and RO in the RO resource information for the two-step CFRA.

Correspondingly, if the configuration information for CFRA does not include the separate RO resource information for the terminal, there are also two situations. One is that only the RO configuration information is absent in the RO resource information; and the other is that the entire RO resource information is absent.

In the case where only the RO configuration information in the RO resource information is absent, it is necessary to determine the RO configuration information in the RO resource information for the initiated two-step CFRA. For example, the RO configuration information in the RO resource information for the initiated two-step CFRA can be determined based on the RO configuration information in the RO resource information for the two-step CBRA.

In the case where the entire RO resource information is absent, it is necessary to determine the RO configuration information and the correspondence between SSB and RO in the RO resource information for the initiated two-step CFRA. For example, the RO configuration information in the RO resource information for the initiated two-step CFRA can be determined based on the RO configuration information in the RO resource information for the 4-step CBRA. How to determine the correspondence between SSB and RO will be explained in subsequent embodiments.

The following embodiments will illustrate how to determine the RO configuration information in the RO resource information for the initiated two-step CFRA based on the RO configuration information in the RO resource information for the 4-step CBRA.

Fig. 12 is a schematic flowchart of another method for indicating random access occasion resource information illustrated according to an embodiment of the present invention. As shown in Fig. 12, the RO resource information includes RO configuration information, and in case that separate RO resource information configured in the configuration information for CFRA is absent for the terminal, determining the RO resource information for the initiated two-step CFRA based on the RO resource information for the specified release of CBRA includes:
in step S1201, indicating the terminal to determine the RO configuration information in the RO resource information for the 4-step CBRA in the specified release as the RO configuration information in the RO resource information for the initiated 2-step CFRA, in case that there is no RO configuration information independently configured for the terminal in the configuration information for CFRA.

In one embodiment, the RO resource information includes RO configuration information, which means that separate RO resource information configured in the configuration information for CFRA being absent for the terminal at least includes separate RO configuration information in the RO resource information configured in the configuration information for CFRA being absent for the terminal.

In this case, the network side device can indicate the terminal to determine the RO configuration information in the RO resource information for the 4-step CBRA in the specified release as the RO configuration information in the RO resource information for the initiated 2-step CFRA.

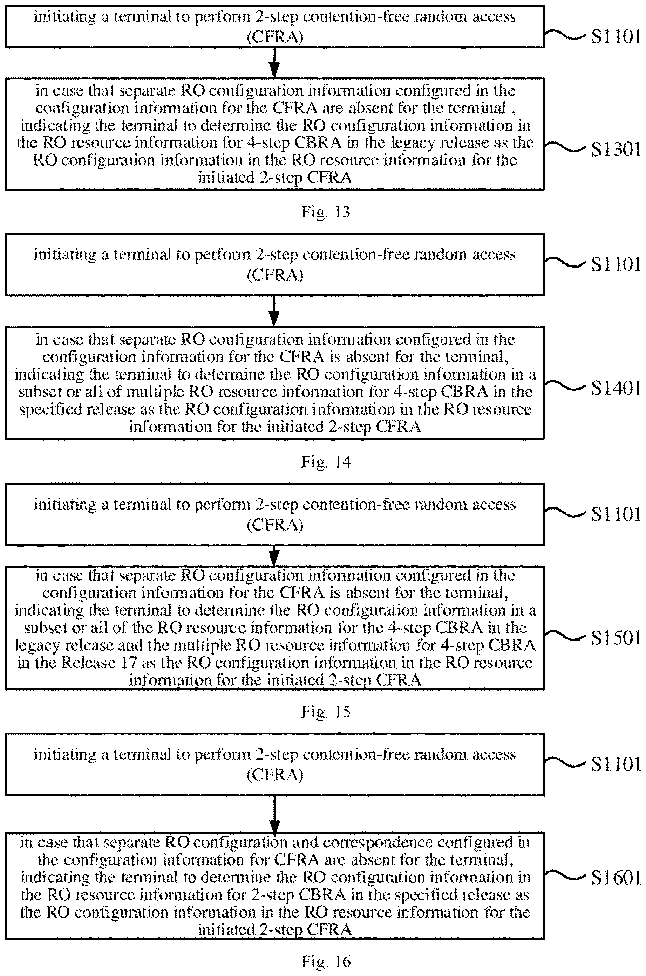

Fig. 13 is a schematic flowchart of yet another method for indicating random access occasion resource information illustrated according to an embodiment of the present invention. As shown in Fig. 13, indicating the terminal to determine the RO configuration information in the RO resource information for the 4-step CBRA in the specified release as the RO configuration information in the RO resource information for the initiated 2-step CFRA includes:
in step S1301, indicating the terminal to determine the RO configuration information in the RO resource information for the 4-step CBRA in the legacy release as the RO configuration information in the RO resource information for the initiated 2-step CFRA.

In one embodiment, the specified release may be a legacy release, and the network side device can indicate the terminal to determine the RO configuration information in the RO resource information for the 4-step CBRA in the legacy release as the RO configuration information in the RO resource information for the initiated 2-step CFRA.

Fig. 14 is a schematic flowchart of yet another method for indicating random access occasion resource information illustrated according to an embodiment of the present invention. As shown in Fig. 14, indicating the terminal to determine the RO configuration information in the RO resource information for the 4-step CBRA in the specified release as the RO configuration information in the RO resource information for the initiated 2-step CFRA includes:
in step S1401, indicating the terminal to determine the RO configuration information in the subset or all of multiple resource information for the 4-step CBRA in the Release 17 as the RO configuration information in the RO resource information for the initiated 2-step CFRA.

In one embodiment, the specified release may be the Release 17. As different CBRA configuration information can be configured for different features in the Release 17, the terminal can be configured with multiple RO resource information for the 4-step CBRA in the Release 17.

In this case, in the multiple RO resource information for the 4-step CBRA in Release 17, the network side device can indicate the terminal to determine the RO configuration information in the subset of the resource information (which may be one or more) as the RO configuration information in the RO resource information for the initiated 2-step CFRA; or can determine the RO configuration information in all of the resource information as the RO configuration information in the RO resource information for the initiated two-step CFRA.

The network side device indicates the terminal to determine the RO configuration information in the subset of the resource information for the 4-step CBRA in the Release 17 as the RO configuration information in the RO resource information for the initiated 2-step CFRA. The subset of the resource information can be determined based on the predefined the 4-step CBRA configuration information list in the Release 17. For example, multiple RO configuration information is arranged in order in the list. The subset of resource information may be the first n configuration information in the list, where n is an integer greater than or equal to 1.

In addition, the network side device indicates the terminal to determine the RO configuration information in all of the resource information as the RO configuration information in the RO resource information for the initiated two-step CFRA, which means that the ROs configured by the RO configuration information in all of the resource information are available to the terminal.

In one embodiment, indicating the terminal to determine the RO configuration information in the subset or all of the multiple RO resource information for the 4-step CBRA in the Release 17 as the RO configuration information in the RO resource information for the initiated 2-step CFRA includes:
indicating the terminal to determine the RO configuration information in the subset or all of the multiple RO resource information for the 4-step CBRA in the Release 17 as the RO configuration information in the RO resource information for the initiated 2-step CFRA.

In one embodiment, the network side device can indicate the terminal to determine the RO resource information for the initiated 2-step CFRA according to the RO resource information for the 4-step CBRA in the Release 17, and after receiving the indication, the terminal can determine the RO configuration information in the subset or all of the multiple RO resource information for the 4-step CBRA in the Release 17 as the RO configuration information in the RO resource information for the initiated 2-step CFRA.

When the network side device does not indicate the terminal to determine the RO resource information for the initiated 2-step CFRA according to the RO resource information for the 4-step CBRA in the Release 17, the terminal can determine the RO configuration information in the RO resource information for the initiated 2-step CFRA according to the RO configuration information in the RO resource information for the 4-step CBRA in the legacy release.

In one embodiment, indicating the terminal to determine the RO configuration information in the subset or all of the multiple RO resource information for the 4-step CBRA in the Release 17 as the RO configuration information in the RO resource information for the initiated 2-step CFRA includes:
when the terminal supports determining the RO configuration information in the RO resource information for the initiated 2-step CFRA according to the RO configuration information in the RO resource information for the 4-step CBRA in the Release 17, indicating the terminal to determine the RO configuration information in the subset or all of the multiple RO resource information for the 4-step CBRA in the Release 17 as the RO configuration information in the RO resource information for the initiated 2-step CFRA.

The method further includes:
when the terminal does not support determining the RO resource information for the initiated 2-step CFRA according to the RO resource information for the 4-step CBRA in the Release 17, indicating the terminal to determine the RO configuration information in the RO resource information for the initiated 2-step CFRA according to the RO configuration information in the RO resource information for the 4-step CBRA in the legacy release.

In one embodiment, the network side device can determine according to the capability of the terminal, whether the terminal supports determine the RO configuration information in the subset or all of the multiple RO resource information for the 4-step CBRA in the Release 17 as the RO configuration information in the RO resource information for the initiated 2-step CFRA.

For example, when the terminal supports determining the RO resource information for the initiated 2-step CFRA according to the RO resource information for the 4-step CBRA in the Release 17, the network side device can indicate the terminal to determine the RO configuration information in the subset or all of the multiple RO resource information for the 4-step CBRA in the Release 17 as the RO configuration information in the RO resource information for the initiated 2-step CFRA.

When determining that the terminal does not support determining the RO resource information for the initiated 2-step CFRA according to the RO resource information for the 4-step CBRA in the Release 17, the network side device can indicate the terminal to determine the RO configuration information in the RO resource information for the initiated 2-step CFRA according to the RO configuration information in the RO resource information for the 4-step CBRA in the legacy release.

In one embodiment, the capabilities of the terminal may also include its support for features such as Slicing, SDT, CE, Redcap, etc. The network side device can determine the features supported by the terminal in the features according to the capabilities of the terminal, and then the network side device can determine one or more RO resource information for the 4-step CBRA corresponding to the supported features in the multiple RO resource information for the 4-step CBRA in Release 17, and then indicate the terminal to determine the determined one or more RO resource information for the 4-step CBRA as the RO configuration information in the RO resource information for the initiated 2-step CFRA.

For example, if the network side device configures four RO resource information for the 4-step CBRA in Release 17 for the four features of Slicing, SDT, CE, and Redcap, and the capability of the terminal only supports the CE and Redcap features, then the network side device can indicate the terminal to determine the two RO resource information for the 4-step CBRA corresponding to the CE and Redcap features in the four RO resource information for the 4-step CBRA in Release 17, and then determine the determined two RO resource information for the 4-step CBRA as the RO configuration information in the RO resource information for the initiated two-step CFRA.

Fig. 15 is a schematic flowchart of yet another method for indicating random access occasion resource information illustrated according to an embodiment of the present invention. As shown in Fig. 15, indicating the terminal to determine the RO configuration information in the RO resource information for the 4-step CBRA in the specified release as the RO configuration information in the RO resource information for the initiated 2-step CFRA includes:
in step S1501, indicating the terminal to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

In one embodiment, the specified release may include legacy release and Release 17. Since different CBRA configuration information can be configured for different features in the Release 17, the terminal can be configured with multiple RO resource information for the 4-step CBRA in the Release 17.

In this case, in the RO resource information for the 4-step CBRA in the legacy release and the multiple RO resource information for the 4-step CBRA in the Release 17, the network side device can indicate the terminal to determine the RO configuration information in the subset of the resource information (may be one or more) as the RO configuration information in the RO resource information for the initiated 2-step CFRA; or can indicate the terminal to determine the RO configuration information in all of the resource information as the RO configuration information in the RO resource information for the initiated two-step CFRA.

When indicating the terminal to at least determine the RO configuration information in the subset of multiple RO resource information for the 4-step CBRA in the Release 17 as the RO configuration information in the RO resource information for the initiated 2-step CFRA, the subset of resource information can be determined based on the predefined 4-step CBRA configuration information list in the Release 17. For example, multiple RO configuration information is arranged in order in the list, and the subset of resource information may be the first n configuration information in the list, where n is an integer greater than or equal to 1.

In addition, the terminal is indicated to determine the RO configuration information in all of the resource information as the RO configuration information in the RO resource information for the initiated two-step CFRA, which means that the RO configured by the RO configuration information in all resource information is available to the terminal.

In one embodiment, when the network side device can indicate the terminal to determine the RO resource information for the initiated 2-step CFRA according to the RO resource information for the 4-step CBRA in the legacy release and the RO resource information for the 4-step CBRA in the Release 17, the terminal can determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

When the network side device does not indicate the terminal to determine the RO resource information for the initiated 2-step CFRA according to the RO resource information for the 4-step CBRA in the legacy release and the RO resource information for the 4-step CBRA in the Release 17, the terminal can determine the RO configuration information in the RO resource information for the initiated 2-step CFRA according to the RO configuration information in the RO resource information for the 4-step CBRA in the legacy release.

In one embodiment, indicating the terminal to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA includes:
in case that the terminal supports determining the RO configuration information in the RO resource information for the initiated 2-step CFRA according to the RO configuration information in the RO resource information for the 4-step CBRA in the Release 17, indicating the terminal to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

The method further includes:
in case that the terminal does not support determining the RO resource information for the initiated 2-step CFRA according to the RO resource information for the 4-step CBRA in the Release 17, indicating the terminal to determine the RO configuration information in the RO resource information for the initiated 2-step CFRA according to the RO configuration information in the RO resource information for the 4-step CBRA in the legacy release.

In one embodiment, the network side device can determine according to the capability of the terminal, whether the terminal supports determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

For example, when determining according to the capability of the terminal that the terminal supports determining the RO resource information for the initiated 2-step CFRA according to the RO resource information for the 4-step CBRA in the Release 17, it can indicate the terminal to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

However, when determining according to the capability of the terminal that the terminal does not support determining the RO resource information for the initiated 2-step CFRA according to the RO resource information for the 4-step CBRA in the Release 17, it can indicate the terminal to determine the RO configuration information in the RO resource information for the initiated 2-step CFRA only according to the RO configuration information in the RO resource information for the 4-step CBRA in the legacy release.

In one embodiment, the capabilities of the terminal may also include its support for features such as Slicing, SDT, CE, Redcap, etc. The network side device can determine the features supported by the terminal in the features according to the capabilities of the terminal. When the terminal determines RO resource information for the initiated two-step CFRA based on at least the RO resource information for the Release 17 of a 4-step CFRA, the network side device can determine one or more RO resource information for 4-step CBRA corresponding to the supported features in multiple RO resource information for the 4-step CBRA in the Release 17, and then indicate the terminal to determine the determined one or more RO resource information for 4-step CBRA as the RO configuration information in the RO resource information for the initiated two-step CFRA.

For example, if the network side device configures four RO resource information for the 4-step CBRA in Release 17 for the four features of Slicing, SDT, CE, and Redcap, and the capability of the terminal only supports the CE and Redcap features, then the network side device can determine the two RO resource information for the 4-step CBRA corresponding to the CE and Redcap features in the four RO resource information for the 4-step CBRA in Release 17, and then indicate the terminal to determine the determined two RO resource information for the 4-step CBRA as the RO configuration information in the RO resource information for the initiated two-step CFRA.

Fig. 16 is a schematic flowchart of yet another method for indicating random access occasion resource information illustrated according to an embodiment. As shown in Fig. 16, the RO resource information includes RO configuration information and the correspondence, and in case that separate RO resource information configured in the configuration information for CFRA is absent for the terminal, indicating the terminal to determine the RO resource information for the initiated 2-step CFRA according to the RO resource information for the CBRA in the specified release includes:
in step S1601, in case that separate RO configuration and correspondence configured in the configuration information for CFRA are absent for the terminal, indicating the terminal to determine the RO configuration information in the RO resource information for the 2-step CBRA in the specified release as the RO configuration information in the RO resource information for the initiated 2-step CFRA.

In one embodiment, the RO resource information includes the RO configuration information and the correspondence, that is, separate RO configuration and correspondence configured in the configuration information for the CFRA are absent for the terminal. In this case, the network side device can indicate the terminal to determine the RO configuration information in the RO resource information for the 2-step CBRA in the specified release as the RO configuration information in the RO resource information for the initiated 2-step CFRA.

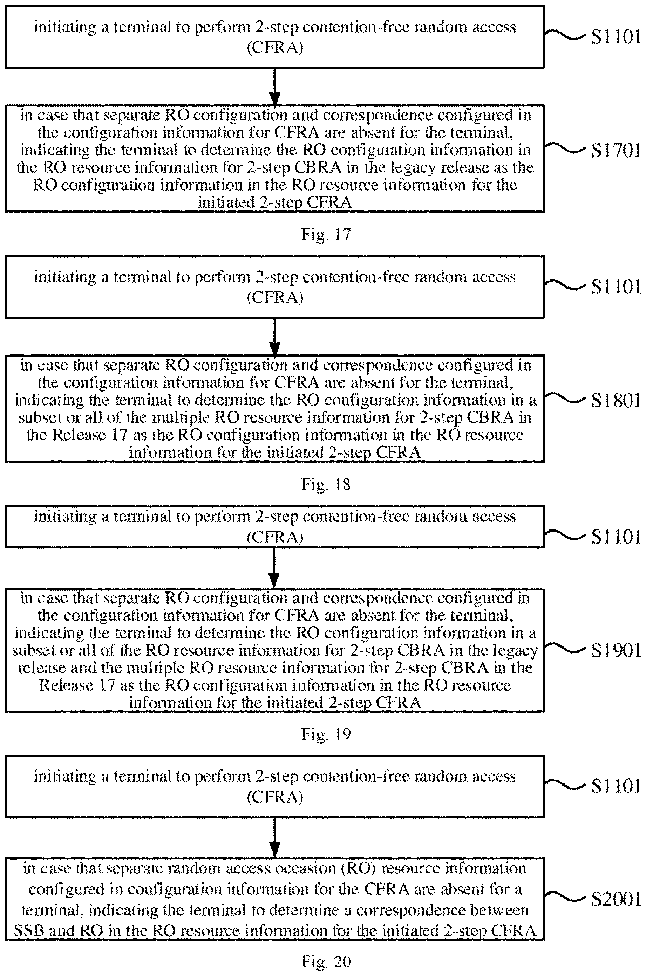

Fig. 17 is a schematic flowchart of yet another method for indicating random access occasion resource information illustrated according to an embodiment. As shown in Fig. 17, indicating the terminal to determine the RO configuration information in the RO resource information for the 2-step CBRA in the specified release as the RO configuration information in the RO resource information for the initiated 2-step CFRA includes:
in step S 1701, indicating the terminal to determine the RO configuration information in the RO resource information for the 2-step CBRA in the legacy release as the RO configuration information in the RO resource information for the initiated 2-step CFRA.

In one embodiment, the specified release may be the legacy release, and the network side device can indicate the terminal to determine the RO configuration information in the RO resource information for the 2-step CBRA in the legacy release as the RO configuration information in the RO resource information for the initiated 2-step CFRA.

Fig. 18 is a schematic flowchart of yet another method for indicating random access occasion resource information illustrated according to an embodiment. As shown in Fig. 18, indicating the terminal to determine the RO configuration information in the RO resource information for the 2-step CBRA in the specified release as the RO configuration information in the RO resource information for the initiated 2-step CFRA includes:
in step S1801, indicating the terminal to determine the RO configuration information in the subset or all of the multiple RO resource information for the 2-step CBRA in the Release 17 as the RO configuration information in the RO resource information for the initiated 2-step CFRA.

In one embodiment, the specified release may be the Release 17. Since different CBRA configuration information can be configured for different features in the Release 17, the terminal can be configured with multiple RO resource information for 2-step CBRA in the Release 17.

In this case, in the multiple RO resource information for the 2-step CBRA in the Release 17, the network side device can indicate the terminal to determine the RO configuration information in the subset of resource information (may be one or more) as the RO configuration information in the RO resource information for the initiated 2-step CFRA; or can indicate the terminal to determine the RO configuration information in all of the resource information as the RO configuration information in the RO resource information for the initiated two-step CFRA.

When the terminal is indicated to determine the RO configuration information in the subset of multiple RO resource information for the 2-step CBRA in the Release 17 as the RO configuration information in the RO resource information for the initiated 2-step CFRA, the subset of resource information can be determined based on the predefined 2-step CBRA configuration information list in the Release 17. For example, multiple RO configuration information is arranged in order in the list, and the subset of resource information may be the first n configuration information in the list, where n is an integer greater than or equal to 1.

In addition, the terminal is indicated to determine the RO configuration information in all of the resource information as the RO configuration information in the RO resource information for the initiated two-step CFRA, which means that the RO configured by the RO configuration information in all resource information is available to the terminal.

In one embodiment, when the network side device can indicate the terminal to determine the RO resource information for the initiated 2-step CFRA according to the RO resource information for the 2-step CBRA in the Release 17, the terminal can determine the RO configuration information in the subset or all of the multiple RO resource information for the 2-step CBRA in the Release 17 as the RO configuration information in the RO resource information for the initiated 2-step CFRA according to the indication.

When the network side device does not indicate the terminal to determine the RO resource information for the initiated 2-step CFRA according to the RO resource information for the 2-step CBRA in the Release 17, the terminal can determine the RO configuration information in the RO resource information for the initiated 2-step CFRA according to the RO configuration information in the RO resource information for the 2-step CBRA in the legacy release.

In one embodiment, indicating the terminal to determine the RO configuration information in the subset or all of the multiple RO resource information for the 2-step CBRA in the Release 17 as the RO configuration information in the RO resource information for the initiated 2-step CFRA includes:
in case that the terminal supports determining the RO configuration information in the RO resource information for the initiated 2-step CFRA according to the RO configuration information in the RO resource information for the 2-step CBRA in the Release 17, indicating the terminal to determine the RO configuration information in the subset or all of the multiple RO resource information for the 2-step CBRA in the Release 17 as the RO configuration information in the RO resource information for the initiated 2-step CFRA.

The method further includes:
in case that the terminal does not support determining the RO resource information for the initiated 2-step CFRA according to the RO resource information for the 2-step CBRA in the Release 17, indicating the terminal to determine the RO configuration information in the RO resource information for the initiated 2-step CFRA according to the RO configuration information in the RO resource information for the 2-step CBRA in the legacy release.

In one embodiment, the network side device can determine according to the capability of the terminal, whether the terminal supports determining the RO configuration information in the subset or all of the multiple RO resource information for the 2-step CBRA in the Release 17 as the RO configuration information in the RO resource information for the initiated 2-step CFRA.

For example, when determining according to the capability of the terminal that the terminal supports determining the RO resource information for the initiated 2-step CFRA according to the RO resource information for the 2-step CBRA in the Release 17, it can indicate the terminal to determine the RO configuration information in the subset or all of the multiple RO resource information for the 2-step CBRA in the Release 17 as the RO configuration information in the RO resource information for the initiated 2-step CFRA.

However, when determining according to the capability of the terminal that the terminal does not support determining the RO resource information for the initiated 2-step CFRA according to the RO resource information for the 2-step CBRA in the Release 17, it can indicate the terminal to determine the RO configuration information in the RO resource information for the initiated 2-step CFRA according to the RO configuration information in the RO resource information for the 2-step CBRA in the legacy release.

In one embodiment, the capabilities of the terminal may also include its support for features such as Slicing, SDT, CE, Redcap, etc. The network side device can determine the features supported by the terminal in the features according to the capabilities of the terminal. Then, the network side device can determine one or more RO resource information for 2-step CBRA corresponding to the supported features in multiple RO resource information for the 2-step CBRA in the Release 17, and then indicate the terminal to determine the determined one or more RO resource information for 2-step CBRA as the RO configuration information in the RO resource information for the initiated two-step CFRA.

For example, if the network side device configures four RO resource information for 2-step CBRA in Release 17 for the four features of Slicing, SDT, CE, and Redcap, and the capability of the terminal only supports the CE and Redcap features, then the network side device can determine the two RO resource information for 2-step CBRA corresponding to the CE and Redcap features in the four RO resource information for the 2-step CBRA in Release 17, and then indicate the terminal to determine the determined two RO resource information for 2-step CBRA as the RO configuration information in the RO resource information for the initiated two-step CFRA.

Fig. 19 is a schematic flowchart of yet another method for indicating random access occasion resource information illustrated according to an embodiment. As shown in Fig. 19, indicating the terminal to determine the RO configuration information in the RO resource information for the 2-step CBRA in the specified release as the RO configuration information in the RO resource information for the initiated 2-step CFRA includes:
in step S1901, indicating the terminal to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

In one embodiment, the specified release may include the legacy release and the Release 17. Since different CBRA configuration information can be configured for different features in the Release 17, the terminal can be configured with multiple RO resource information for 2-step CBRA in the Release 17.

In this case, in the RO resource information for the 2-step CBRA in the legacy release and the multiple RO resource information for the 2-step CBRA in the Release 17, the network side device can indicate the terminal to determine the RO configuration information in the subset of resource information (may be one or more) as the RO configuration information in the RO resource information for the initiated 2-step CFRA; or can indicate the terminal to determine the RO configuration information in all of the resource information as the RO configuration information in the RO resource information for the initiated two-step CFRA.

When the terminal is indicated to at least determine the RO configuration information in the subset of multiple RO resource information for the 2-step CBRA in the Release 17 as the RO configuration information in the RO resource information for the initiated 2-step CFRA, the subset of resource information can be determined based on the predefined 2-step CBRA configuration information list in the Release 17. For example, multiple RO configuration information is arranged in order in the list, and the subset of resource information may be the first n configuration information in the list, where n is an integer greater than or equal to 1.

In addition, the terminal is indicated to determine the RO configuration information in all of the resource information as the RO configuration information in the RO resource information for the initiated two-step CFRA, which means that the RO configured by the RO configuration information in all resource information is available to the terminal.

In one embodiment, when the network side device can indicate the terminal to determine the RO resource information for the initiated 2-step CFRA according to the RO resource information for the 2-step CBRA in the legacy release and the RO resource information for the 2-step CBRA in the Release 17, the terminal can determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA according to the indication.

When the network side device does not indicate the terminal to determine the RO resource information for the initiated 2-step CFRA according to the RO resource information for the 2-step CBRA in the legacy release and the RO resource information for the 2-step CBRA in the Release 17, the terminal can the RO resource information for the initiated 2-step CFRA according to the RO configuration information in the RO resource information for the 2-step CBRA in the legacy release.

In one embodiment, indicating the terminal to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA includes:
in case that the terminal supports determining the RO configuration information in the RO resource information for the initiated 2-step CFRA according to the RO configuration information in the RO resource information for the 2-step CBRA in the Release 17, indicating the terminal to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

The method further includes:
in case that the terminal does not support determining the RO resource information for the initiated 2-step CFRA according to the RO resource information for the 2-step CBRA in the Release 17, indicating the terminal to determine the RO configuration information in the RO resource information for the initiated 2-step CFRA according to the RO configuration information in the RO resource information for the 2-step CBRA in the legacy release.

In one embodiment, the network side device determines according to the capability of the terminal, whether the terminal supports determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

For example, when determining that the terminal supports determining the RO resource information for the initiated 2-step CFRA according to the RO resource information for the 2-step CBRA in the Release 17, it can indicate the terminal to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

However, when determining that the terminal does not support determining the RO resource information for the initiated 2-step CFRA according to the RO resource information for the 2-step CBRA in the Release 17, it can indicate the terminal to determine the RO configuration information in the RO resource information for the initiated 2-step CFRA only according to the RO configuration information in the RO resource information for the 2-step CBRA in the legacy release.

In one embodiment, the capabilities of the terminal may also include its support for features such as Slicing, SDT, CE, Redcap, etc. The network side device can determine the features supported by the terminal in the features according to the capabilities of the terminal. When indicating the terminal to determine the RO resource information for the initiated 2-step CFRA at least according to the RO resource information for the 2-step CFRA in the Release 17, the network side device can determine one or more RO resource information for 2-step CBRA corresponding to the supported features in multiple RO resource information for the 2-step CBRA in the Release 17, and then indicate the terminal determine the determined one or more RO resource information for the 2-step CBRA as the RO configuration information in the RO resource information for the initiated two-step CFRA.

For example, if the network side device configures four RO resource information for 2-step CBRA in Release 17 for the four features of Slicing, SDT, CE, and Redcap, and the network side device determines that the terminal only supports the CE and Redcap features, then the network side device can determine the two RO resource information for 2-step CBRA corresponding to the CE and Redcap features in the four RO resource information for the 2-step CBRA in Release 17, and then indicate the terminal to determine the determined two RO resource information for 2-step CBRA as the RO configuration information in the RO resource information for the initiated two-step CFRA.

Fig. 20 is a schematic flowchart of yet another method for indicating random access occasion resource information illustrated according to an embodiment of the present invention. As shown in Fig. 20, in case that separate RO resource information configured in the configuration information for CFRA is absent for the terminal, indicating the terminal to determine the RO resource information for the initiated 2-step CFRA according to the RO resource information for the CBRA in the specified release further includes:
in step S2001, indicating the terminal to determine a correspondence between SSB and RO in the RO resource information for the initiated 2-step CFRA in a specified manner.

In one embodiment, the network side needs to indicate the terminal to determine the RO configuration information in the RO resource information for the initiated 2-step CFRA according to the RO resource information for the CBRA in the specified release. For example, the terminal may determine the RO configuration information in the RO resource information for the CBRA in the specified release as the RO configuration information in the RO resource information for the initiated 2-step CFRA.

In order to determine the RO for performing the 2-step CFRA, the terminal also needs to determine the correspondence between SSB and RO in addition to determine the RO configuration information. Thus, the network side device also needs to further indicate the terminal to determine the correspondence between SSB and RO in the RO resource information for the initiated 2-step CFRA. Specifically, the network side device can indicate the terminal to determine the correspondence between SSB and RO in the RO resource information for the initiated 2-step CFRA in the specified manner. Then, the terminal can determine the RO used by the initiated 2-step CFRA according to the RO configuration information and the correspondence.

In one embodiment, the specified manner includes at least one of:
determining the correspondence between SSB and RO in the RO resource information for the 2-step CBRA in the specified release as the correspondence between SSB and RO in the RO resource information for the initiated 2-step CFRA; or
determining the correspondence between SSB and RO in the RO resource information for the initiated 2-step CFRA according to the correspondence between SSB and RO in the RO resource information for 2-step CBRA in all releases pre-configured by the network side device to the terminal.

In one embodiment, after indicating the terminal to determine the RO configuration information in the RO resource information for the 4-step CBRA in the specified release as the RO configuration information in the RO resource information for the initiated 2-step CFRA based on the aforementioned embodiments, the network side device can further indicate the terminal to determine the correspondence between the synchronization signal block SSB and RO in the RO resource information for the 4-step CBRA in the specified release as the correspondence between SSB and RO in the RO resource information for the initiated two-step CFRA. That is, the RO configuration information and the correspondence between SSB and RO may belong to the same RO resource information.

In one embodiment, after indicating the terminal to determine the RO configuration information in the RO resource information for the 4-step CBRA in the specified release as the RO configuration information in the RO resource information for the initiated 2-step CFRA based on the aforementioned embodiments, the network side device can further indicate the terminal to determine the correspondence between SSB and RO in the RO resource information for the initiated two-step CFRA according to the correspondence between SSB and RO in the RO resource information for CBRA in all releases pre-configured by the network side device to the terminal (not limited to the RO resource information for CBRA in the specified release).

It should be noted that when there are multiple correspondences between SSB and RO in the RO resource information for CBRA in all releases pre-configured by the network side device to the terminal, the terminal can be indicated to determine one correspondence between SSB and RO therefrom, wherein the correspondences between SSB and RO are represented by numerical values, such as 1/8, 1/4, 1/2, 1, 2, 4, 8, 16, etc. The network side device can choose one of the values and indicate it to the terminal, such as selecting the maximum or minimum value.

Embodiments of the present invention further provide a method for configuring contention-free random access. The method is performed by a network side device and includes:
in case that resources for 2-step CBRA in a specified release are configured on a bandwidth part (BWP) selected by a terminal, configuring resources for a 2-step CFRA.

In one embodiment, if the network side device configures resources for the terminal to perform the two-step CFRA on the BWP selected by the terminal, and the terminal cannot use the two-step CFRA resources for certain reasons (such as default), the terminal needs to use the two-step CBRA resources for two-step CFRA. However, if the two-step CBRA resources are not configured on the BWP, it will result in the terminal not being able to use the two-step CBRA resources for two-step CFRA, seriously affecting communication effect.

Therefore, according to embodiments of the present invention, if and only if resources for the 2-step CBRA in the specified release are configured on the BWP selected by the terminal, resources for the 2-step CFRA are configured. Based on this, it can be ensured that even if the terminal cannot use the two-step CFRA resources, it can still use the 2-step CBRA resources, ensuring the smooth progress of two-step CFRA.

If the resources for the 2-step CBRA in the specified release are not configured on the BWP selected by the terminal, the resources for the 2-step CFRA can be left not configured.

In one embodiment, the specified release is determined according to an indication from the network side device, or determined according to the protocol agreement.

In one embodiment, the specified release includes at least one of legacy release or Release 17. In one embodiment, the legacy release includes at least one of Release 15 or Release 16.

Embodiments of the present invention further provide a method for configuring contention-free random access. The method is performed by a network side device, and includes:

in case that resources for the 4-step CBRA in a specified release are not configured on a BWP selected by a terminal, or in case that resource for the 4-step CBRA in the specified release are configured on the BWP selected by the terminal, and the resources for the 4-step CBRA in the specified release are not shared, configuring RO configuration information in resource information for the 2-step CFRA.

In one embodiment, due to the absence of RO configuration information in the resource information for the 2-step CFRA, the terminal needs to use the RO configuration information in resource information for the 4-step CBRA. If resources for the 4-step CBRA in the specified release are not configured on the BWP selected by the terminal, or if resources for the 4-step CBRA in the specified release are configured on the BWP and resources for the 4-step CBRA in the specified release are not shared, the terminal cannot use the RO configuration information in resource information for the 4-step CBRA for a 2-step CFRA, which seriously affects communication effectiveness.

Therefore, according to embodiments of the present invention, in case that resources for the 4-step CBRA in the specified release are not configured on the BWP selected by the terminal, or in case that resources for the 4-step CBRA in the specified release are configured on the BWP selected by the terminal, and the resources for the 4-step CBRA in the specified release are not shared, the RO configuration information in the resource information for the 2-step CFRA must be configured. Based on this, when the terminal cannot use the configuration information in resource information for the 4-step CBRA for two-step CFRA, CFRA can be performed based on the configured RO configuration information in the resource information for two-step CFRA to ensure the smooth progress of two-step CFRA.

In one embodiment, the specified release is determined according to indication from the network side device, or determined according to the protocol agreement.

In one embodiment, the specified release includes at least one of legacy release or Release 17. In one embodiment, the legacy release includes at least one of Release 15 or Release 16.

Corresponding to the aforementioned methods for determining random access occasion resource information, methods for indicating random access occasion resource information, and methods for configuring contention-free random access, this invention also provides an apparatus for determining random access occasion resource information, an apparatus for indicating random access occasion resource information, and an apparatus for configuring contention-free random access.

Embodiments of the present invention provide an apparatus for determining random access occasion resource information. The apparatus can be applicable to a terminal, including but not limited to a communication device such as a mobile phone, a tablet, a wearable device, a sensor, and an IoT device. The terminal can communicate with a network side device, including but not limited to a network side device in communication systems such as 4G, 5G, 6G, etc., such as a base station, a core network, etc.

In one embodiment, the apparatus for determining random access occasion resource information includes one or more processor. The processor is configured to:
initiate a 2-step contention-free random access (CFRA); and
in case that separate random access occasion (RO) resource information configured in configuration information for the CFRA is absent for a terminal, determine RO resource information for the initiated 2-step CFRA according to RO resource information for a contention-based random access (CBRA) in a specified release.

In one embodiment, the specified release is determined according to indication of a network side device, or determined according to a protocol agreement.

In one embodiment, the specified release includes at least one of legacy release, or Release 17. In one embodiment, the legacy release comprises at least one of Release 15, or Release 16.

In one embodiment, the RO resource information includes at least one of:
RO configuration information; or
a correspondence between synchronization signal block (SSB) and RO.

In one embodiment, the RO resource information includes RO configuration information, and the processor is configured to:
in case that separate RO resource information configured in the configuration information for the CFRA is absent for the terminal, determine the RO configuration information in the RO resource information for the 4-step CBRA in the specified release as the RO configuration information in the RO resource information for the initiated 2-step CFRA.

In one embodiment, the processor is configured to:
determine the RO configuration information in the RO resource information for the 4-step CBRA in the legacy release as the RO configuration information in the RO resource information for the initiated 2-step CFRA.

In one embodiment, the processor is configured to:
determine the RO configuration information in the subset or all of multiple RO resource information for the 4-step CBRA in the Release 17 as the RO configuration information in the RO resource information for the initiated 2-step CFRA.

In one embodiment, the processor is configured to:
when receiving an indication from a network side device indicating to determine the RO resource information for the initiated 2-step CFRA according to the RO resource information for the 4-step CBRA in the Release 17, determine the RO configuration information in the subset or all of multiple RO resource information for the 4-step CBRA in the Release 17 as the RO configuration information in the RO resource information for the initiated 2-step CFRA;
the processor is further configured to:
   when not receiving an indication from a network side device indicating to determine the RO resource information for the initiated 2-step CFRA according to the RO resource information for the 4-step CBRA in the Release 17, determine the RO configuration information in the RO resource information for the initiated 2-step CFRA according to the RO configuration information in the RO resource information for the 4-step CBRA in the legacy release.

In one embodiment, the processor is configured to:
in case that the terminal supports determining the RO configuration information in the RO resource information for the initiated 2-step CFRA according to the RO configuration information in the RO resource information for the 4-step CBRA in the Release 17, determine the RO configuration information in the subset or all of the multiple RO resource information for the 4-step CBRA in the Release 17 as the RO configuration information in the RO resource information for the initiated 2-step CFRA;
the processor is further configured to:
   in case that the terminal does not support determining the RO resource information for the initiated 2-step CFRA according to the RO resource information for the 4-step CBRA in the Release 17, determine the RO configuration information in the RO resource information for the initiated 2-step CFRA according to the RO configuration information in the RO resource information for the 4-step CBRA in the legacy release.

In one embodiment, the processor is configured to:
determine the RO configuration information in the subset or all of the multiple RO resource information for the 4-step CBRA in the Release 17 as the RO configuration information in the RO resource information for the initiated 2-step CFRA according to implementation of the terminal.

In one embodiment, the processor is configured to:
determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

In one embodiment, the processor is configured to:
when receiving an indication from a network side device indicating to determine the RO resource information for the initiated 2-step CFRA according to the RO resource information for the 4-step CBRA in the legacy release and the RO resource information for the 4-step CBRA in the Release 17, determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA;
the processor is further configured to:
   when not receiving an indication from a network side device indicating to determine the RO resource information for the initiated 2-step CFRA according to the RO resource information for the 4-step CBRA in the legacy release and the RO resource information for the 4-step CBRA in the Release 17, determine the RO configuration information in the RO resource information for the initiated 2-step CFRA according to the RO resource information for the 4-step CBRA in the legacy release.

In one embodiment, the processor is configured to:
in case that the terminal supports determining the RO resource information for the initiated 2-step CFRA according to the RO resource information for the 4-step CBRA in the Release 17, determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA;
the processor is further configured to:
   in case that the terminal does not support determining the RO resource information for the initiated 2-step CFRA according to the RO resource information for the 4-step CBRA in the Release 17, determine the RO configuration information in the RO resource information for the initiated 2-step CFRA according to the RO configuration information in the RO resource information for the 4-step CBRA in the legacy release.

In one embodiment, the processor is configured to:
determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA according to an implementation of the terminal.

In one embodiment, the RO resource information includes RO configuration information and the correspondence, and the processor is configured to:
in case that separate RO configuration and correspondence configured in the configuration information for CFRA are absent for the terminal, determine the RO configuration information in the RO resource information for the 2-step CBRA in the specified release as the RO configuration information in the RO resource information for the initiated 2-step CFRA.

In one embodiment, the processor is configured to:
determine the RO configuration information in the RO resource information for the 2-step CBRA in the legacy release as the RO configuration information in the RO resource information for the initiated 2-step CFRA.

In one embodiment, the processor is configured to:
determine the RO configuration information in the subset or all of the multiple RO resource information for the 2-step CBRA in the Release 17 as the RO configuration information in the RO resource information for the initiated 2-step CFRA.

In one embodiment, the processor is configured to:
when receiving an indication from a network side device indicating to determine the RO resource information for the initiated 2-step CFRA according to the RO resource information for the 2-step CFRA in the Release 17, determine the RO configuration information in the subset or all of the multiple RO resource information for the 2-step CBRA in the Release 17 as the RO configuration information in the RO resource information for the initiated 2-step CFRA;
the processor is further configured to:
   when not receiving an indication from a network side device indicating to determine the RO configuration information in the RO resource information for the initiated 2-step CFRA according to the RO configuration information in the RO resource information for the 2-step CFRA in the Release 17, determine the RO configuration information in the RO resource information for the initiated 2-step CFRA according to the RO configuration information in the RO resource information for the 2-step CBRA in the legacy release.

In one embodiment, the processor is configured to:
in case that the terminal supports determining the RO configuration information in the RO resource information for the initiated 2-step CFRA according to the RO configuration information in the RO resource information for the 2-step CFRA in the Release 17, determine the RO configuration information in the subset or all of the multiple RO resource information for the 2-step CBRA in the Release 17 as the RO configuration information in the RO resource information for the initiated 2-step CFRA;
the processor is further configured to:
   in case that the terminal does not support determining the RO resource information for the initiated 2-step CFRA according to the RO resource information for the 2-step CFRA in the Release 17, determine the RO configuration information in the RO resource information for the initiated 2-step CFRA according to the RO configuration information in the RO resource information for the 2-step CBRA in the legacy release.

In one embodiment, the processor is configured to:
determine the RO configuration information in the subset or all of the multiple RO resource information for the 2-step CBRA in the Release 17 as the RO configuration information in the RO resource information for the initiated 2-step CFRA according to an implementation of the terminal.

In one embodiment, the processor is configured to:
determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

In one embodiment, the processor is configured to:
when receiving an indication from a network side device indicating to determine the RO resource information for the initiated 2-step CFRA according to the RO resource information for the 2-step CBRA in the legacy release and the RO resource information for the 2-step CBRA in the Release 17, determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA;
the processor is further configured to:
   when not receiving an indication from a network side device indicating to determine the RO resource information for the initiated 2-step CFRA according to the RO resource information for the 2-step CBRA in the legacy release and the RO resource information for the 2-step CBRA in the Release 17, determine the RO configuration information in the RO resource information for the initiated 2-step CFRA according to the RO resource information for the 2-step CBRA in the legacy release.

In one embodiment, the processor is configured to:
in case that the terminal supports determining the RO resource information for the initiated 2-step CFRA according to the RO resource information for the 2-step CBRA in the Release 17, determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA;
the processor is further configured to:
   in case that the terminal does not support determining the RO resource information for the initiated 2-step CFRA according to the RO resource information for the 2-step CFRA in the Release 17, determine the RO configuration information in the RO resource information for the initiated 2-step CFRA according to the RO configuration information in the RO resource information for the 2-step CBRA in the legacy release.

In one embodiment, the processor is configured to:
determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA according to an implementation of the terminal.

In one embodiment, the processor is further configured to:
determine a correspondence between SSB and RO in the RO resource information for the initiated 2-step CFRA.

In one embodiment, the processor is configured to:
determine the correspondence between SSB and RO in the RO resource information for the 2-step CBRA in the specified release as the correspondence between SSB and RO in the RO resource information for the initiated 2-step CFRA.

In one embodiment, the processor is configured to:
determine the correspondence between SSB and RO in the RO resource information for the initiated 2-step CFRA according to a correspondence between SSB and RO in the RO resource information for 2-step CBRA in all releases pre-configured by a network side device to the terminal.

In one embodiment, the processor is configured to:
determine the correspondence between SSB and RO in the RO resource information for the initiated 2-step CFRA according to a terminal implementation.

Embodiments of the present invention further provide an apparatus for indicating random access occasion resource information. The apparatus can be applicable to a network side device. The network side device can communicate with a terminal. The terminal includes but is not limited to a communication device such as a mobile phone, a tablet, a wearable device, a sensor, and an IoT device. The network side device includes but is not limited to a network side device in communication systems such as 4G, 5G, 6G, etc., such as a base station, a core network, etc.

In one embodiment, the apparatus for indicating random access occasion resource information includes one or more processor. The processor is configured to:
initiate a terminal to perform a 2-step contention-free random access (CFRA); and
in case that separate random access occasion (RO) resource information configured for in configuration information for CFRA is absent for the terminal, indicate the terminal to determine RO resource information for the initiated 2-step CFRA according to RO resource information for a contention-based random access (CBRA) in a specified release.

In one embodiment, the specified release includes at least one of legacy release, or Release 17. In one embodiment, the legacy release includes at least one of Release 15, or Release 16.

In one embodiment, the RO resource information includes at least one of:
RO configuration information; or
a correspondence between synchronization signal block (SSB) and RO.

In one embodiment, the RO resource information includes the RO configuration information, and the processor is configured to:
in case that separate RO resource information configured in the configuration information for the CFRA is absent for the terminal, indicate the terminal to determine the RO configuration information in the RO resource information for the 4-step CBRA in the specified release as the RO configuration information in the RO resource information for the initiated 2-step CFRA.

In one embodiment, the processor is configured to:
indicate the terminal to determine the RO configuration information in the RO resource information for the 4-step CBRA in the legacy release as the RO configuration information in the RO resource information for the initiated 2-step CFRA.

In one embodiment, the processor is configured to:
indicate the terminal to determine the RO configuration information in the subset or all of multiple RO resource information for the 4-step CBRA in the Release 17 as the RO configuration information in the RO resource information for the initiated 2-step CFRA.

In one embodiment, the processor is configured to:
indicate the terminal to determine the RO configuration information in the subset or all of multiple RO resource information for the 4-step CBRA in the Release 17 as the RO configuration information in the RO resource information for the initiated 2-step CFRA.

In one embodiment, the processor is configured to:
in case that the terminal supports determining the RO configuration information in the RO resource information for the initiated 2-step CFRA according to the RO configuration information in the RO resource information for the 4-step CBRA in the Release 17, indicate the terminal to determine the RO configuration information in the subset or all of the multiple RO resource information for the 4-step CBRA in the Release 17 as the RO configuration information in the RO resource information for the initiated 2-step CFRA;
the processor is further configured to:
   in case that the terminal does not support determining the RO resource information for the initiated 2-step CFRA according to the RO resource information for the 4-step CBRA in the Release 17, indicate the terminal to determine the RO configuration information in the RO resource information for the initiated 2-step CFRA according to the RO configuration information in the RO resource information for the 4-step CBRA in the legacy release.

In one embodiment, the processor is configured to:
indicate the terminal to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA.

In one embodiment, the processor is configured to:
in case that the terminal supports determining the RO resource information for the initiated 2-step CFRA according to the RO resource information for the 4-step CBRA in the Release 17, indicate the terminal to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA;
the processor is further configured to:
   in case that the terminal does not support determining the RO resource information for the initiated 2-step CFRA according to the RO resource information for the 4-step CBRA in the Release 17, indicate the terminal to determine the RO configuration information in the RO resource information for the initiated 2-step CFRA according to the RO configuration information in the RO resource information for the 4-step CBRA in the legacy release.

In one embodiment, the RO resource information includes the RO configuration information the correspondence, and the processor is configured to:
in case that separate RO configuration and correspondence configured in the configuration information for the CFRA are absent for the terminal, indicate the terminal to determine the RO configuration information in the RO resource information for the 2-step CBRA in the specified release as the RO configuration information in the RO resource information for the initiated 2-step CFRA.

In one embodiment, the processor is configured to:
indicate the terminal to determine the RO configuration information in the RO resource information for the 2-step CBRA in the legacy release as the RO configuration information in the RO resource information for the initiated 2-step CFRA.

In one embodiment, the processor is configured to:
indicate the terminal to determine the RO configuration information in the subset or all of the multiple RO resource information for the 2-step CBRA in the Release 17 as the RO configuration information in the RO resource information for the initiated 2-step CFRA.

In one embodiment, the processor is configured to:
in case that the terminal supports determining the RO configuration information in the RO resource information for the initiated 2-step CFRA according to the RO configuration information in the RO resource information for the 2-step CFRA in the Release 17, indicate the terminal to determine the RO configuration information in the subset or all of the multiple RO resource information for the 2-step CBRA in the Release 17 as the RO configuration information in the RO resource information for the initiated 2-step CFRA;
the processor is further configured to:
   in case that the terminal does not support determining the RO resource information for the initiated 2-step CFRA according to the RO resource information for the 2-step CFRA in the Release 17, indicate the terminal to determine the RO configuration information in the RO resource information for the initiated 2-step CFRA according to the RO configuration information in the RO resource information for the 2-step CBRA in the legacy release.

In one embodiment, the processor is configured to:
indicate the terminal to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

In one embodiment, the processor is configured to:
in case that the terminal supports determining the RO resource information for the initiated 2-step CFRA according to the RO resource information for the 2-step CFRA in the Release 17, indicate the terminal to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA;
the processor is further configured to:
   in case that the terminal does not support determining the RO resource information for the initiated 2-step CFRA according to the RO resource information for the 2-step CFRA in the Release 17, indicate the terminal to determine the RO configuration information in the RO resource information for the initiated 2-step CFRA according to the RO configuration information in the RO resource information for the 2-step CBRA in the legacy release.

In one embodiment, the processor is configured to:
indicate the terminal to determine a correspondence between SSB and RO in the RO resource information for the initiated 2-step CFRA in a specified manner.

In one embodiment, the specified manner includes at least one of:
determining the correspondence between SSB and RO in the RO resource information for the 2-step CBRA in the specified release as the correspondence between SSB and RO in the RO resource information for the initiated 2-step CFRA; or
determining the correspondence between SSB and RO in the RO resource information for the initiated 2-step CFRA according to a correspondence between SSB and RO in the RO resource information for 2-step CBRA in all releases pre-configured by a network side device to the terminal.

In one embodiment, the processor is configured to:
in case that separate RO resource information configured in the configuration information for the CFRA is absent for the terminal, and the terminal has been configured with multiple RO resource information for CBRA, indicate target RO resource information for CBRA in the multiple RO resource information for CBRA as the RO resource information for the initiated 2-step CFRA.

Embodiments of the present invention further provide an apparatus for configuring contention-free random access, including one or more processor. The processor is configured to:
in case that resources for 2-step contention-based random access (CBRA) in a specified release are configured on a bandwidth part (BWP) selected by a terminal, configure resources for 2-step contention-free random access (CFRA).

Embodiments of the present invention further provide an apparatus for configuring contention-free random access, including one or more processor. The processor is configured to:
in case that no resource for a 4-step contention-based random access (CBRA) in a specified release is configured on a bandwidth part (BWP) selected by a terminal, or in case that resources for the 4-step CBRA in a specified release is configured on the BWP and the resources for the 4-step CBRA in the specified release are not shared, configure RO configuration information in resource information for a 2-step CFRA.

Regarding the apparatus in the above embodiments, the specific ways in which each module performs operations have been described in detail in the relevant method embodiments, and will not be elaborated here.

For the apparatus embodiment, since it basically corresponds to the method embodiment, please refer to the partial explanation of the method embodiment for relevant information. The apparatus embodiments described above are only illustrative, where the modules described as separate components may or may not be physically separated, and the components displayed as modules may or may not be physical modules, that is, they can be located in one place or distributed across multiple network modules. The subset or all modules can be selected according to actual needs to achieve the purpose of this embodiment. Ordinary technical personnel in this field can understand and implement it without creative labor.

Embodiments of the present invention further provide a communication device, including a processor and a memory configured to store a computer program. When the computer program is executed by a processor, the method for determining random access occasion resource information described in any embodiment is implemented.

Embodiments of the present invention further provide a communication device, including a processor and a memory configured to store a computer program. When the computer program is executed by a processor, the method for indicating random access occasion resource information described in any embodiment and/or the method for configuring contention-free random access described in any embodiment is implemented.

Embodiments of the present invention further provide a computer readable storage medium, configured to store a computer program. When the computer program is executed by a processor, steps in the method for determining random access occasion resource information described in any embodiment are implemented.

Embodiments of the present invention further provide a computer readable storage medium, configured to store a computer program. When the computer program is executed by a processor, steps in the method for indicating random access occasion resource information described in any embodiment and/or the method for configuring contention-free random access described in any embodiment are implemented.

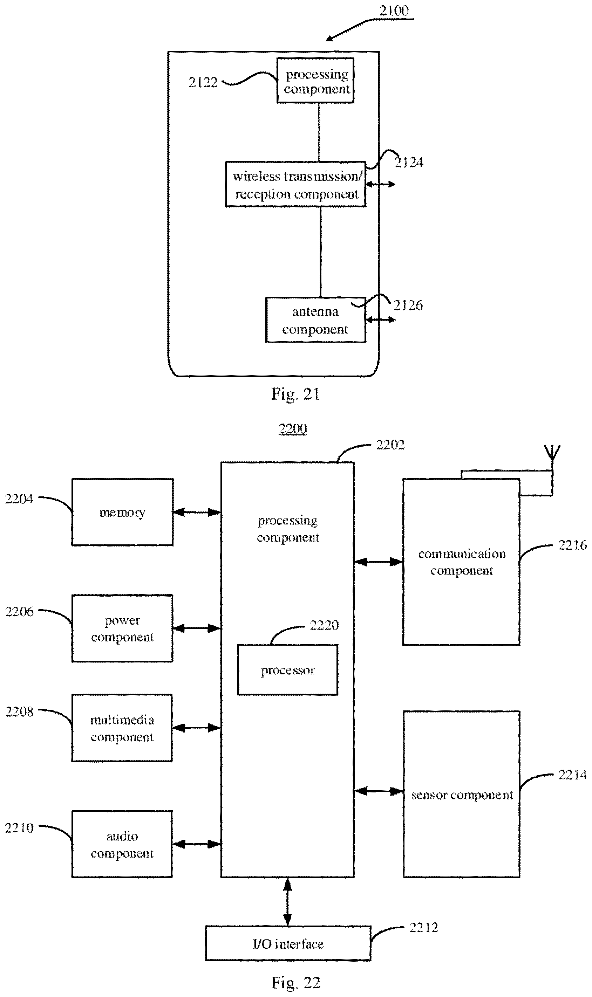

As shown in Fig. 21, Fig. 21 is a schematic block diagram of a device 2100 for indicating random access occasion resource information according to an embodiment of the present invention. The device 2100 can be provided as a base station. Referring to Fig. 21, the device 2100 includes a processing component 2122, a wireless transmission/reception component 2124, an antenna component 2126, and a signal processing part unique to the wireless interface. The processing component 2122 may further include one or more processors. One of the processors in the processing component 2122 can be configured to implement a method for indicating random access occasion resource information as described in any of the above embodiments, and/or a method for configuring contention-free random access as described in any of the above embodiments.

Fig. 22 is a schematic block diagram of a device 2200 for determining random access occasion resource information illustrated according to an embodiment of the present invention. For example, the device 2200 may be a mobile phone, computer, digital broadcasting terminal, messaging device, game console, tablet device, medical device, fitness device, personal digital assistant, etc.

Referring to Fig. 22, the device 2200 may include one or more of the following components: a processing component 2202, a memory 2204, a power component 2206, a multimedia component 2208, an audio component 2210, an input/output (I/O) interface 2212, a sensor component 2214, and a communication component 2216.

The processing component 2202 typically controls overall operations of the device 2200, such as the operations associated with display, telephone calls, data communications, camera operations, and recording operations. The processing component 2202 may include one or more processors 2220 to execute instructions. Moreover, the processing component 2202 may include one or more modules which facilitate the interaction between the processing component 2202 and other components. For instance, the processing component 2202 may include a multimedia module to facilitate the interaction between the multimedia component 1008 and the processing component 2202.

The memory 2204 is configured to store various types of data to support the operation of the device 2200. Examples of such data include instructions for any applications or methods operated on the device 2200, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2206 provides power to various components of the device 2200. The power component 2206 may include a power management system, one or more power sources, and any other components associated with the generation, management, and distribution of power in the device 2200.

The multimedia component 2208 includes a screen providing an output interface between the device 2200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2208 includes a front camera and/or a rear camera. When the device 2200 is in an operation mode, such as a shooting mode or a video mode, the front camera and/or the rear camera can receive external multimedia data. Each front camera and rear camera can be a fixed optical lens system or have focal length and optical zoom capabilities.

The audio component 2210 is configured to output and/or input audio signals. For example, the audio component 2210 includes a microphone ("MIC") configured to receive an external audio signal when the device 2200 is in an operation mode, such as a call mode, a recording mode, and a voice recognition mode. The received audio signal may be further stored in the memory 2204 or transmitted via the communication component 2216. In some embodiments, the audio component 2210 further includes a speaker for outputting audio signals.

The I/O interface 2212 provides an interface between the processing component 2202 and peripheral interface modules, such as a keyboard, a click wheel, buttons, and the like. The buttons may include but are not limited to: home button, volume button, start button, and lock button.

The sensor component 2214 includes one or more sensors to provide status assessments of various aspects of the device 2200. For instance, the sensor component 2214 may detect an open/closed status of the device 2200, relative positioning of components, e.g., the display and the keypad, of the device 2200, a change in position of the device 2200 or a component of the device 2200, a presence or absence of a target object contact with the device 2200, an orientation or an acceleration/deceleration of the device 2200, and a change in temperature of the device 2200. The sensor component 2214 may include a proximity sensor configured to detect the presence of nearby objects without any physical contact. The sensor component 2214 may also include a light sensor, such as a CMOS or CCD image sensor, applicable for imaging applications. In some embodiments, the sensor component 2214 may also include an acceleration sensor, a gyroscope sensor, a magnetic sensor, a pressure sensor or a temperature sensor.

The communication component 2218 is configured to facilitate communication, wired or wirelessly, between the device 2200 and other devices. The device 2200 can access a wireless network based on a communication standard, such as WiFi, 2G, or 3G, or a combination thereof. In one exemplary embodiment, the communication component 2218 receives a broadcast signal or broadcast associated information from an external broadcast management system via a broadcast channel. In one exemplary embodiment, the communication component 2218 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the device 2200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to execute the method according to any of the above embodiments.

In exemplary embodiments, there is also provided a non-transitory computer readable storage medium such as a memory 2204 storing instructions, which may be executed by a processor 2220 of the device 2200 to implement the method mentioned above. For example, the non-transitory readable storage medium may be a ROM, a RAM, a CD-ROM, a magnetic tape, a floppy disc, an optical data storage device, and the like.

After considering the specification and practicing the invention disclosed herein, those skilled in the art will easily think of other embodiments of the present invention. This invention is intended to cover any variations, purposes, or adaptive changes of the present invention. These variations, purposes, or adaptive changes follow general principles of the present invention and include common knowledge or conventional technical means in the technical field not disclosed in the present invention. The description and the embodiments are only regarded as exemplary, and the true scope and spirit of the present invention are pointed out by the following claims.

It should be understood that the present invention is not limited to the precise structure that has been described above and illustrated in the drawings, and various modifications and changes can be made without departing from its scope. The scope of the present invention is only limited by the appended claims.

It should be noted that herein, relational terms such as first and second are only used to distinguish one entity or operation from another entity or operation, and do not necessarily require or imply any actual relationship or order between these entities or operations. The terms "including", "comprising", or any other variation thereof are intended to encompass non-exclusive inclusion, such that a process, method, item, or device that includes a series of elements not only includes those elements, but also includes other elements that are not explicitly listed, or also includes elements inherent to such process, method, item, or device. Without further limitations, the elements limited by the statement "including one..." do not exclude the existence of other identical elements in the process, method, item, or device that includes the said elements.

The above provides a detailed illustration to the methods and devices provided in the embodiments of the present invention. Specific examples are applied herein to explain the principles and implementation methods of the present invention. The above examples are only used to help understand the methods and core ideas disclosed in this invention. Meanwhile, for general technical personnel in this field, there may be changes in specific implementation methods and application scope based on the ideas disclosed in this invention. In summary, the content of this specification should not be understood as a limitation on this invention.

## Claims

1. A method for determining random access occasion resource information, performed by a terminal, comprising:
initiating a 2-step contention-free random access (CFRA); and
in case that separate random access occasion (RO) resource information configured in configuration information for the CFRA is absent for the terminal, determining RO resource information for the initiated 2-step CFRA according to RO resource information for a contention-based random access (CBRA) in a specified release.

2. The method of claim 1, wherein the specified release is determined according to an indication from a network side device, or determined according to a protocol agreement.

3. The method of claim 1, wherein the specified release comprises at least one of:
a legacy release, or Release 17.

4. The method of claim 3, wherein the legacy release comprises at least one of:
Release 15, or Release 16.

5. The method of claim 4, wherein the RO resource information comprises at least one of:
RO configuration information; or
a correspondence between synchronization signal block (SSB) and RO.

6. The method of claim 5, wherein the RO resource information comprises the RO configuration information, and in case that separate RO resource information configured in configuration information for the CFRA is absent for the terminal, determining RO resource information for the initiated 2-step CFRA according to RO resource information for CBRA in a specified release, comprises:
in case that separate RO resource information configured in the configuration information for the CFRA is absent for the terminal, determining the RO configuration information in the RO resource information for a 4-step CBRA in the specified release as the RO configuration information in the RO resource information for the initiated 2-step CFRA.

7. The method of claim 6, wherein determining the RO configuration information in the RO resource information for the 4-step CBRA in specified release as the RO configuration information in the RO resource information for the initiated 2-step CFRA comprises:
determining the RO configuration information in the RO resource information for the 4-step CBRA in the legacy release as the RO configuration information in the RO resource information for the initiated 2-step CFRA.

8. The method of claim 6, wherein determining the RO configuration information in the RO resource information for the 4-step CBRA in the specified release as the RO configuration information in the RO resource information for the initiated 2-step CFRA comprises:
determining the RO configuration information in a subset or all of multiple resource information for the 4-step CBRA in the Release 17 as the RO configuration information in the RO resource information for the initiated 2-step CFRA.

9. The method of claim 8, wherein determining the RO configuration information in a subset or all of multiple resource information for the 4-step CBRA in the Release 17 as the RO configuration information in the RO resource information for the initiated 2-step CFRA comprises:
when receiving an indication from a network side device indicating to determine the RO resource information for the initiated 2-step CFRA according to the RO resource information for the 4-step CBRA in the Release 17, determining the RO configuration information in a subset or all of multiple resource information for the 4-step CBRA in the Release 17 as the RO configuration information in the RO resource information for the initiated 2-step CFRA;
the method further comprises:
when not receiving an indication from a network side device indicating to determine the RO resource information for the initiated 2-step CFRA according to the RO resource information for the 4-step CBRA in the Release 17, determining the RO configuration information in the RO resource information for the initiated 2-step CFRA according to the RO configuration information in the RO resource information for the 4-step CBRA in the legacy release.

10. The method of claim 8, wherein determining the RO configuration information in a subset or all of multiple resource information for the 4-step CBRA in the Release 17 as the RO configuration information in the RO resource information for the initiated 2-step CFRA comprises:
in case that the terminal supports determining the RO configuration information in the RO resource information for the initiated 2-step CFRA according to the RO configuration information in the RO resource information for the 4-step CBRA in the Release 17, determining the RO configuration information in the subset or all of multiple resource information in the RO resource information for the 4-step CBRA in the Release 17 as the RO configuration information in the RO resource information for the initiated 2-step CFRA;
the method further comprises:
in case that the terminal does not support determining the RO resource information for the initiated 2-step CFRA according to the RO resource information for the 4-step CBRA in the Release 17, determining the RO configuration information in the RO resource information for the initiated 2-step CFRA according to the RO configuration information in the RO resource information for the 4-step CBRA in the legacy release.

11. The method of claim 8, wherein determining the RO configuration information in the subset or all of multiple resource information for the 4-step CBRA in the Release 17 as the RO configuration information in the RO resource information for the initiated 2-step CFRA comprises:
determining the RO configuration information in the subset or all of multiple resource information for the 4-step CBRA in the Release 17 as the RO configuration information in the RO resource information for the initiated 2-step CFRA according to implementation of the terminal.

12. The method of claim 6, wherein determining the RO configuration information in the RO resource information for the 4-step CBRA in the specified release as the RO configuration information in the RO resource information for the initiated 2-step CFRA comprises:
determining the RO configuration information in a subset or all of the RO resource information for the 4-step CBRA in the legacy release of and multiple RO resource information for the 4-step CBRA in the Release 17 as the RO configuration information in the RO resource information for the initiated 2-step CFRA.

13. The method of claim 12, wherein determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA comprises:
when receiving an indication from a network side device indicating to determine the RO resource information for the initiated 2-step CFRA according to the RO resource information for the 4-step CBRA in the legacy release and the RO resource information for the 4-step CBRA in the Release 17, determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA;
the method further comprises:
when not receiving an indication from a network side device indicating to determine the RO resource information for the initiated 2-step CFRA according to the RO resource information for 4-step CBRA in the legacy release and the RO resource information for the 4-step CBRA in the Release 17, determining the RO configuration information in the RO resource information for the initiated 2-step CFRA according to the RO resource information for the 4-step CBRA in the legacy release.

14. The method of claim 12, wherein determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA comprises:
in case that the terminal supports determining the RO resource information for the initiated 2-step CFRA according to the RO resource information for the 4-step CBRA in the Release 17, determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA;
the method further comprises:
in case that the terminal does not support determining the RO resource information for the initiated 2-step CFRA according to the RO resource information for the 4-step CBRA in the Release 17, determining the RO configuration information in the RO resource information for the initiated 2-step CFRA according to the RO configuration information in the RO resource information for the 4-step CBRA in the legacy release.

15. The method of claim 12, wherein determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA comprises:
determining the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA according to an implementation of the terminal.

16. The method of claim 5, wherein the RO resource information comprises RO configuration information and the correspondence, and in case that separate RO resource information configured in the configuration information for the CFRA is absent for the terminal, determining the RO resource information for the initiated 2-step CFRA according to the RO resource information for CBRA in the specified release comprises:
in case that separate RO configuration and correspondence in the configuration information for the CFRA is absent for the terminal, determining the RO configuration information in the RO resource information for 2-step CBRA in the specified release as the RO configuration information in the RO resource information for the initiated 2-step CFRA.

17. The method of claim 16, wherein determining the RO configuration information in the RO resource information for the 2-step CBRA in the specified release as the RO configuration information in the RO resource information for the initiated 2-step CFRA comprises:
determining the RO configuration information in the RO resource information for the 2-step CBRA in the legacy release as the RO configuration information in the RO resource information for the initiated 2-step CFRA.

18. The method of claim 16, wherein determining the RO configuration information in the RO resource information for the 2-step CBRA in the specified release as the RO configuration information in the RO resource information for the initiated 2-step CFRA comprises:
determining the RO configuration information in a subset or all of multiple RO resource information for the 2-step CBRA in the Release 17 as the RO configuration information in the RO resource information for the initiated 2-step CFRA.

19. The method of claim 18, wherein determining the RO configuration information in the subset or all of the multiple RO resource information for the 2-step CBRA in the Release 17 as the RO configuration information in the RO resource information for the initiated 2-step CFRA comprises:
when receiving an indication from a network side device indicating to determine the RO resource information for the initiated 2-step CFRA according to the RO resource information for the 2-step CFRA in the Release 17, determining the RO configuration information in the subset or all of the multiple RO resource information for the 2-step CBRA in the Release 17 as the RO configuration information in the RO resource information for the initiated 2-step CFRA;
the method further comprises:
when not receiving an indication from a network side device indicating to determine the RO configuration information in the RO resource information for the initiated 2-step CFRA according to the RO configuration information in the RO resource information for the 2-step CFRA in the Release 17, determining the RO configuration information in the RO resource information for the initiated 2-step CFRA according to the RO configuration information in the RO resource information for the 2-step CBRA in the legacy release.

20. The method of claim 18, wherein determining the RO configuration information in the subset or all of the multiple RO resource information for the 2-step CBRA in the Release 17 as the RO configuration information in the RO resource information for the initiated 2-step CFRA comprises:
in case that the terminal supports determining the RO configuration information in the RO resource information for the initiated 2-step CFRA according to the RO configuration information in the RO resource information for the 2-step CFRA in the Release 17, determining the RO configuration information in the subset or all of the multiple RO resource information for the 2-step CBRA in the Release 17 as the RO configuration information in the RO resource information for the initiated 2-step CFRA;
the method further comprises:
in case that the terminal does not support determining the RO resource information for the initiated 2-step CFRA according to the RO resource information for the 2-step CFRA in the Release 17, determining the RO configuration information in the RO resource information for the initiated 2-step CFRA according to the RO configuration information in the RO resource information for the 2-step CBRA in the legacy release.

21. The method of claim 18, wherein determining the RO configuration information in the subset or all of the multiple RO resource information for the 2-step CBRA in the Release 17 as the RO configuration information in the RO resource information for the initiated 2-step CFRA comprises:
determining the RO configuration information in the subset or all of the multiple RO resource information for the 2-step CBRA in the Release 17 as the RO configuration information in the RO resource information for the initiated 2-step CFRA according to an implementation of the terminal.

22. The method of claim 16, wherein determining the RO configuration information in the RO resource information for the 2-step CBRA in the specified release as the RO configuration information in the RO resource information for the initiated 2-step CFRA comprises:
determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

23. The method of claim 22, wherein determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA comprises:
when receiving an indication from a network side device indicating to determine the RO resource information for the initiated 2-step CFRA according to the RO resource information for the 2-step CBRA in the legacy release and the RO resource information for the 2-step CBRA in the Release 17, determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA;
the method further comprises:
when not receiving an indication from a network side device indicating to determine the RO resource information for the initiated 2-step CFRA according to the RO resource information for the 2-step CBRA in the legacy release and the RO resource information for the 2-step CBRA in the Release 17, determining the RO configuration information in the RO resource information for the initiated 2-step CFRA according to the RO resource information for the 2-step CBRA in the legacy release.

24. The method of claim 22, wherein determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA comprises:
in case that the terminal supports determining the RO resource information for the initiated 2-step CFRA according to the RO resource information for the 2-step CBRA in the Release 17, determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA;
the method further comprises:
in case that the terminal does not support determining the RO resource information for the initiated 2-step CFRA according to the RO resource information for the 2-step CFRA in the Release 17, determining the RO configuration information in the RO resource information for the initiated 2-step CFRA according to the RO configuration information in the RO resource information for the 2-step CBRA in the legacy release.

25. The method of claim 22, wherein determining the RO configuration information in the subset or all of resource information in the RO resource information for the 2-step CBRA in the legacy release and the multiple RO resource information for the 2-step CBRA in the Release 17 as the RO configuration information in the RO resource information for the initiated 2-step CFRA comprises:
determining the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA according to an implementation of the terminal.

26. The method of claim 16, wherein in case that separate RO resource information configured in configuration information for the CFRA is absent for the terminal, determining the RO resource information for the initiated 2-step CFRA according to the RO resource information for the CBRA in specified release further comprises:
determining the correspondence between SSB and RO in the RO resource information for the initiated 2-step CFRA.

27. The method of claim 26, wherein determining the correspondence between SSB and RO in the RO resource information for the initiated 2-step CFRA comprises:
determining the correspondence between SSB and RO in the RO resource information for the 2-step CBRA in the specified release as the correspondence between SSB and RO in the RO resource information for the initiated 2-step CFRA.

28. The method of claim 26, wherein determining the correspondence between SSB and RO in the RO resource information for the initiated 2-step CFRA comprises:
determining the correspondence between SSB and RO in the RO resource information for the initiated 2-step CFRA according to a correspondence between SSB and RO in the RO resource information for 2-step CBRA in all releases pre-configured by a network side device to the terminal.

29. The method of claim 26, wherein determining the correspondence between SSB and RO in the RO resource information for the initiated 2-step CFRA comprises:
determining the correspondence between SSB and RO in the RO resource information for the initiated 2-step CFRA according to a terminal implementation.

30. A method for indicating random access occasion resource information, performed by a network side device, comprising:
initiating a terminal to perform a 2-step contention-free random access (CFRA); and
in case that separate random access occasion (RO) resource information configured in configuration information for the CFRA is absent for a terminal, indicating the terminal to determine RO resource information for the initiated 2-step CFRA according to RO resource information for a contention-based random access (CBRA) in a specified release.

31. The method of claim 30, wherein the specified release comprises at least one of:
a legacy release, or Release 17.

32. The method of claim 31, wherein the legacy release comprises at least one of:
Release 15, or Release 16.

33. The method of claim 31, wherein the RO resource information comprises at least one of:
RO configuration information; or
a correspondence between synchronization signal block (SSB) and RO.

34. The method of claim 33, wherein the RO resource information comprises the RO configuration information, and in case that separate RO resource information configured in the configuration information for the CFRA is absent for the terminal, determining RO resource information for the initiated 2-step CFRA according to RO resource information for the CBRA in the specified release, comprises:
in case that separate RO configuration information configured in the configuration information for the CFRA is absent for the terminal, indicating the terminal to determine the RO configuration information in the RO resource information for a 4-step CBRA in the specified release as the RO configuration information in the RO resource information for the initiated 2-step CFRA.

35. The method of claim 34, wherein indicating the terminal to determine the RO configuration information in the RO resource information for the 4-step CBRA in the specified release as the RO configuration information in the RO resource information for the initiated 2-step CFRA comprises:
indicating the terminal to determine the RO configuration information in the RO resource information for the 4-step CBRA in the legacy release as the RO configuration information in the RO resource information for the initiated 2-step CFRA.

36. The method of claim 34, wherein indicating the terminal to determine the RO configuration information in the RO resource information for the 4-step CBRA in the specified release as the RO configuration information in the RO resource information for the initiated 2-step CFRA comprises:
indicating the terminal to determine the RO configuration information in a subset or all of multiple RO resource information for the 4-step CBRA in the Release 17 as the RO configuration information in the RO resource information for the initiated 2-step CFRA.

37. The method of claim 36, wherein indicating the terminal to determine the RO configuration information in the subset or all of multiple RO resource information for the 4-step CBRA in the Release 17 as the RO configuration information in the RO resource information for the initiated 2-step CFRA comprises:
indicating the terminal to determine the RO configuration information in the subset or all of the multiple RO resource information for the 4-step CBRA in the Release 17 as the RO configuration information in the RO resource information for the initiated 2-step CFRA.

38. The method of claim 36, wherein indicating the terminal to determine the RO configuration information in the subset or all of the multiple RO resource information for the 4-step CBRA in the Release 17 as the RO configuration information in the RO resource information for the initiated 2-step CFRA comprises:
in case that the terminal supports determining the RO configuration information in the RO resource information for the initiated 2-step CFRA according to the RO configuration information in the RO resource information for the 4-step CBRA in the Release 17, indicating the terminal to determine the RO configuration information in the subset or all of the multiple RO resource information for the 4-step CBRA in the Release 17 as the RO configuration information in the RO resource information for the initiated 2-step CFRA;
the method further comprises:
in case that the terminal does not support determining the RO resource information for the initiated 2-step CFRA according to the RO resource information for the 4-step CBRA in the Release 17, indicating the terminal to determine the RO configuration information in the RO resource information for the initiated 2-step CFRA according to the RO configuration information in the RO resource information for the 4-step CBRA in the legacy release.

39. The method of claim 34, wherein indicating the terminal to determine the RO configuration information in the RO resource information for the 4-step CBRA in the specified release as the RO configuration information in the RO resource information for the initiated 2-step CFRA comprises:
indicating the terminal to determine the RO configuration information in the subset or all of the RO resource information for the 4-step CBRA in the legacy release and multiple RO resource information for the 4-step CBRA in the Release 17 as the RO configuration information in the RO resource information for the initiated 2-step CFRA.

40. The method of claim 39, wherein indicating the terminal to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA comprises:
in case that the terminal supports determining the RO resource information for the initiated 2-step CFRA according to the RO resource information for the 4-step CBRA in the Release 17, indicating the terminal to determine the RO configuration information in the subset or all of the RO resource information for the 4-step CBRA in the legacy release and the multiple RO resource information for the 4-step CBRA in the Release 17 as the RO configuration information in the RO resource information for the initiated 2-step CFRA;
the method further comprises:
in case that the terminal does not support determining the RO resource information for the initiated 2-step CFRA according to the RO resource information for the 4-step CBRA in the Release 17, indicating the terminal to determine the RO configuration information in the RO resource information for the initiated 2-step CFRA according to the RO configuration information in the RO resource information for the 4-step CBRA in the legacy release.

41. The method of claim 33, wherein the RO resource information comprises the RO configuration information and the correspondence, and in case that separate RO resource information configured in the configuration information for the CFRA is absent for the terminal, indicating the terminal to determine the RO resource information for the initiated 2-step CFRA according to the RO resource information for the CBRA in the specified release comprises:
in case that separate RO configuration and correspondence configured in the configuration information for the CFRA is absent for the terminal, indicating the terminal to determine the RO configuration information in the RO resource information for the 2-step CBRA in the specified release as the RO configuration information in the RO resource information for the initiated 2-step CFRA.

42. The method of claim 41, wherein indicating the terminal to determine the RO configuration information in the RO resource information for the 2-step CBRA in the specified release as the RO configuration information in the RO resource information for the initiated 2-step CFRA comprises:
indicating the terminal to determine the RO configuration information in the RO resource information for the 2-step CBRA in the legacy release as the RO configuration information in the RO resource information for the initiated 2-step CFRA.

43. The method of claim 41, wherein indicating the terminal to determine the RO configuration information in the RO resource information for the 2-step CBRA in the specified release as the RO configuration information in the RO resource information for the initiated 2-step CFRA comprises:
indicating the terminal to determine the RO configuration information in the subset or all of multiple RO resource information for the 2-step CBRA in the Release 17 as the RO configuration information in the RO resource information for the initiated 2-step CFRA.

44. The method of claim 43, wherein indicating the terminal to determine the RO configuration information in the subset or all of the multiple RO resource information for the 2-step CBRA in the Release 17 as the RO configuration information in the RO resource information for the initiated 2-step CFRA comprises:
in case that the terminal supports determining the RO configuration information in the RO resource information for the initiated 2-step CFRA according to the RO configuration information in the RO resource information for the 2-step CFRA in the Release 17, indicating the terminal to determine the RO configuration information in the subset or all of the multiple RO resource information for the 2-step CBRA in the Release 17 as the RO configuration information in the RO resource information for the initiated 2-step CFRA;
the method further comprises:
in case that the terminal does not support determining the RO resource information for the initiated 2-step CFRA according to the RO resource information for the 2-step CFRA in the Release 17, indicating the terminal to determine the RO configuration information in the RO resource information for the initiated 2-step CFRA according to the RO configuration information in the RO resource information for the 2-step CBRA in the legacy release.

45. The method of claim 41, wherein indicating the terminal to determine the RO configuration information in the RO resource information for the 2-step CBRA in the specified release as the RO configuration information in the RO resource information for the initiated 2-step CFRA comprises:
indicating the terminal to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA.

46. The method of claim 45, wherein indicating the terminal to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA comprises:
in case that the terminal supports determining the RO resource information for the initiated 2-step CFRA according to the RO resource information for the 2-step CFRA in the Release 17, indicating the terminal to determine the RO configuration information in the subset or all of the RO resource information for the 2-step CBRA in the legacy release and the multiple RO resource information for the 2-step CBRA in the Release 17 as the RO configuration information in the RO resource information for the initiated 2-step CFRA;
the method further comprises:
in case that the terminal does not support determining the RO resource information for the initiated 2-step CFRA according to the RO resource information for the 2-step CFRA in the Release 17, indicating the terminal to determine the RO configuration information in the RO resource information for the initiated 2-step CFRA according to the RO configuration information in the RO resource information for the 2-step CBRA in the legacy release.

47. The method of claim 41, wherein in case that separate RO resource information configured in the configuration information for CFRA is absent for the terminal, indicating the terminal to determine the RO resource information for the initiated 2-step CFRA according to the RO resource information for CBRA in the specified release further comprises:
indicating the terminal to determine a correspondence between SSB and RO in the RO resource information for the initiated 2-step CFRA in a specified manner.

48. The method of claim 47, wherein the specified manner comprises at least one of:
determining the correspondence between SSB and RO in the RO resource information for the 2-step CBRA in the specified release as the correspondence between SSB and RO in the RO resource information for the initiated 2-step CFRA; or
determining the correspondence between SSB and RO in the RO resource information for the initiated 2-step CFRA according to a correspondence between SSB and RO in the RO resource information for 2-step CBRA in all releases pre-configured by a network side device to the terminal.

49. The method of claim 30, wherein in case that separate RO resource information configured in the configuration information for CFRA is absent for the terminal, indicating the terminal to determine the RO resource information for the initiated 2-step CFRA according to the RO resource information for CBRA in the specified release, comprises:
in case that separate RO resource information configured in the configuration information for the CFRA is absent for the terminal, and the terminal has been configured with multiple RO resource information for CBRA, indicating target RO resource information for CBRA in the multiple RO resource information for CBRA as the RO resource information for the initiated 2-step CFRA.

50. A method for configuring contention-free random access, performed by a network side device, comprising:
in case that resources for 2-step contention-based random access (CBRA) in a specified release are configured on a bandwidth part (BWP) selected by a terminal, configuring resources for 2-step contention-free random access (CFRA).

51. A method for configuring contention-free random access, performed by a network side device, comprising:
in case that no resource for a 4-step contention-based random access (CBRA) in a specified release is configured on a bandwidth part (BWP) selected by a terminal, or in case that resources for the 4-step CBRA in a specified release is configured on the BWP and the resources for the 4-step CBRA in the specified release are not shared, configuring RO configuration information in resource information for a 2-step CFRA.

52. An apparatus for determining random access occasion resource information, comprising one or more processor, wherein the processor is configured to:
initiate a 2-step contention-free random access (CFRA); and
in case that separate random access occasion (RO) resource information configured in configuration information for the CFRA is absent for a terminal, determine RO resource information for the initiated 2-step CFRA according to RO resource information for a contention-based random access (CBRA) in a specified release.

53. An apparatus for indicating random access occasion resource information, comprising one or more processor, wherein the processor is configured to:
initiate a terminal to perform a 2-step contention-free random access (CFRA); and
in case that separate random access occasion (RO) resource information configured in configuration information for CFRA is absent for the terminal, indicate the terminal to determine RO resource information for the initiated 2-step CFRA according to RO resource information for a contention-based random access (CBRA) in a specified release.

54. An apparatus for configuring contention-free random access, comprising one or more processor, wherein the processor is configured to:
in case that resources for 2-step contention-based random access (CBRA) in a specified release are configured on a bandwidth part (BWP) selected by a terminal, configure resources for 2-step contention-free random access (CFRA).

55. An apparatus for configuring contention-free random access, comprising one or more processor, wherein the processor is configured to:
in case that no resource for a 4-step contention-based random access (CBRA) in a specified release is configured on a bandwidth part (BWP) selected by a terminal, or in case that resources for the 4-step CBRA in a specified release are configured on the BWP and the resources for the 4-step CBRA in the specified release are not shared, configure RO configuration information in resource information for a 2-step CFRA.

56. A communication device, comprising:
a processor; and
a memory, configured to store a computer program,
wherein when the computer program is executed by the processor, the method for determining random access occasion resource information according to any of claims 1-29 is implemented.

57. A communication device, comprising:
a processor; and
a memory, configured to store a computer program,
wherein when the computer program is executed by the processor, the method for indicating random access occasion resource information according to any of claims 30-49 and/or the method for configuring contention-free random access according to any of claims 50-51 is implemented.

58. A computer readable storage medium, configured to store a computer program, wherein when the computer program is executed by a processor, steps in the method for determining random access occasion resource information according to any of claims 1-29 are implemented.

59. A computer readable storage medium, configured to store a computer program, wherein when the computer program is executed by a processor, steps in the method for indicating random access occasion resource information according to any of claims 30-49 and/or the method for configuring contention-free random access according to any of claims 50-51 are implemented.
